(19) Europäisches Patentamt
European Patent Office
Office européen des brevets

(11) EP 3 279 160 A1

(12) **EUROPEAN PATENT APPLICATION**
published in accordance with Art. 153(4) EPC

(43) Date of publication:
**07.02.2018 Bulletin 2018/06**

(21) Application number: **16772577.9**

(22) Date of filing: **24.03.2016**

(51) Int Cl.:
***C03C 27/12*** *(2006.01)* ***B32B 17/10*** *(2006.01)*

(86) International application number:
**PCT/JP2016/059475**

(87) International publication number:
**WO 2016/158696 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2015 JP 2015074434**
**31.03.2015 JP 2015074435**

(71) Applicant: **Sekisui Chemical Co., Ltd.**
**Osaka 530-8565 (JP)**

(72) Inventors:
- **MIKAYAMA, Kaoru**
**Mishima-gun**
**Osaka 618-0021 (JP)**
- **OOHIGASHI, Yuji**
**Mishima-gun**
**Osaka 618-0021 (JP)**

(74) Representative: **Ter Meer Steinmeister & Partner**
**Patentanwälte mbB**
**Nymphenburger Straße 4**
**80335 München (DE)**

# (54) INTERMEDIATE FILM FOR LAMINATED GLASS, AND LAMINATED GLASS

(57) There is provided an interlayer film for laminated glass with which the flexural rigidity of laminated glass can be enhanced over a wide temperature range and the sound insulating properties of laminated glass can be enhanced over a wide temperature range. The interlayer film for laminated glass according to the present invention has a shear storage equivalent elastic modulus of 10 MPa or more and 500 MPa or less in a temperature region of 80% or more of the temperature region of 0°C or more and 60°C or less, a value obtained by dividing a shear storage equivalent elastic modulus at 10°C by a shear storage equivalent elastic modulus at 50°C of 1 or more and 10 or less, a glass transition temperature falling within the range of - 25°C or more and 0°C or less, and a largest value of tan δ in a temperature region of -50°C or more and 0°C or less of 0.1 or more and 1 or less.

[FIG. 1]

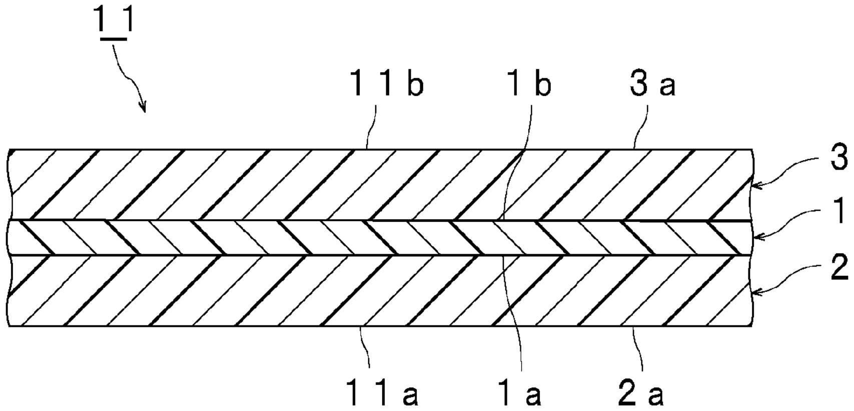


EP 3 279 160 A1

## Description

### TECHNICAL FIELD

The present invention relates to an interlayer film for laminated glass which is used for obtaining laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between two glass plates.

Examples of the interlayer film for laminated glass include a single-layered interlayer film having a one-layer structure and a multi-layered interlayer film having a two or more-layer structure.

As an example of the interlayer film for laminated glass, the following Patent Document 1 discloses a sound insulating layer including 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount greater than 30 parts by weight. This sound insulating layer can be used alone as a single-layered interlayer film.

Furthermore, the following Patent Document 1 also describes a multi-layered interlayer film in which the sound insulating layer and another layer are layered. Another layer to be layered with the sound insulating layer includes 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount of 30 parts by weight or less.

The following Patent Document 2 discloses an interlayer film which is constituted of a polymer layer having a glass transition temperature of 33°C or higher. In Patent Document 2, a technique of arranging the polymer layer between glass plates with a thickness of 4.0 mm or less is described.

The following Patent Document 3 discloses an interlayer film including a polyvinyl acetal (A), at least one kind of plasticizer (B), fumed silica (C) and at least one kind of basic compound (D). In this interlayer film, the difference in refractive index between the fumed silica (C) and a plasticized polyvinyl acetal (A+B) is 0.015 or less, and the weight ratio C/(A+B) is 2.7/100 to 60/100.

### Related Art Document

### Patent Document

Patent Document 1: JP 2007-070200 A
Patent Document 2: US 2013/0236711 A1
Patent Document 3: WO 2008/122608 A1

### SUMMARY OF THE INVENTION

### PROBLEMS TO BE SOLVED BY THE INVENTION

With regard to laminated glass prepared with such a conventional interlayer film described in Patent Documents 1 to 3, there are cases where the laminated glass is low in flexural rigidity. As such, for example, when the laminated glass is used as window glass and used for a side door of an automobile, the side door sometimes does not have a frame for fixing the laminated glass to cause troubles in opening/closing of the window glass due to the deflection attributed to the low rigidity of the laminated glass.

Moreover, in recent years, for the purpose of attaining reduced weight of laminated glass, a technique for making the thickness of a glass plate thin has been desired. In laminated glass prepared with an interlayer film sandwiched between two glass plates, when the thickness of the glass plate is thinned, there is a problem that maintaining the flexural rigidity sufficiently high is extremely difficult.

For example, laminated glass can be reduced in weight as long as the rigidity of laminated glass, even with the thin glass plates, can be enhanced by virtue of the interlayer film. When laminated glass is light in weight, the amount

of the material used for the laminated glass can be decreased to reduce the environmental load. Furthermore, when laminated glass being light in weight is used for an automobile, the fuel consumption can be improved, and as a result, the environmental load can be reduced.

In this connection, in Patent Document 3, it has been described that dynamic characteristics such as tensile strength are improved. However, in general, tensile strength and flexural rigidity are different from each other. Even if the tensile strength can be enhanced to some extent, there are cases where the flexural rigidity fails to be sufficiently enhanced.

Furthermore, in a conventional interlayer film, it is difficult to sufficiently enhance the flexural rigidity over a wide temperature range including high temperatures and low temperatures. For example, there are a case where the flexural rigidity at a high temperature is high and the flexural rigidity at a low temperature is low and a case where the flexural rigidity at a low temperature is high and the flexural rigidity at a high temperature is low.

Moreover, in laminated glass prepared with an interlayer film, in addition to being high in flexural rigidity, being also high in sound insulating properties is desired. In Patent Document 3, even if the tensile strength can be enhanced, the sound insulating properties fail to become sufficiently high. In particular, there is no suggestion about a problem that the flexural rigidity of laminated glass is insufficient when a glass plate thinned in thickness and an interlayer film provided with a sound insulating layer having a low glass transition temperature are combined.

Furthermore, in a conventional interlayer film, it is difficult to sufficiently enhance the sound insulating properties over a wide temperature range including high temperatures and low temperatures. For example, there are a case where the sound insulating properties at a high temperature are high and the sound insulating properties at a low temperature are low and a case where the sound insulating properties at a low temperature are high and the sound insulating properties at a high temperature are low.

An object of the present invention is to provide an interlayer film for laminated glass with which the flexural rigidity of laminated glass can be enhanced over a wide temperature range and the sound insulating properties of laminated glass can be enhanced over a wide temperature range. Moreover, the present invention is also aimed at providing laminated glass prepared with the interlayer film for laminated glass.

## MEANS FOR SOLVING THE PROBLEMS

According to a broad aspect of the present invention, there is provided an interlayer film for laminated glass (hereinafter, sometimes described as an interlayer film) having a shear storage equivalent elastic modulus of 10 MPa or more and 500 MPa or less in a temperature region of 80% or more of the temperature region of 0°C or more and 60°C or less, a value obtained by dividing a shear storage equivalent elastic modulus at 10°C by a shear storage equivalent elastic modulus at 50°C of 1 or more and 10 or less, a glass transition temperature falling within the range of -25°C or more and 0°C or less, and a largest value of tan $\delta$ in a temperature region of -50°C or more and 0°C or less of 0.1 or more and 1 or less.

In a specific aspect of the interlayer film according to the present invention, the glass transition temperature falls within the range of -20°C or more.

In a specific aspect of the interlayer film according to the present invention, the interlayer film includes a resin with a weight average molecular weight of 100000 or more and 1300000 or less.

In a specific aspect of the interlayer film according to the present invention, the value of tan $\delta$ is 0.1 or more in a temperature region of 10% or more of the temperature region of -50°C or more and 0°C or less.

In a specific aspect of the interlayer film according to the present invention, the shear storage equivalent elastic modulus is 10 MPa or more and 400 MPa or less in a temperature region of 80% or more of the temperature region of 0°C or more and 60°C or less.

In a specific aspect of the interlayer film according to the present invention, the interlayer film includes a polyvinyl acetal resin.

In a specific aspect of the interlayer film according to the present invention, the polyvinyl acetal resin is a polyvinyl acetoacetal resin or a polyvinyl butyral resin.

In a specific aspect of the interlayer film according to the present invention, the interlayer film includes an acrylic polymer.

In a specific aspect of the interlayer film according to the present invention, the interlayer film includes a polyvinyl acetal resin and a thermoplastic resin other than the polyvinyl acetal resin.

In a specific aspect of the interlayer film according to the present invention, the thickness thereof is 3 mm or less.

In a specific aspect of the interlayer film according to the present invention, the interlayer film is used together with a first glass plate having a thickness of 1.6 mm or less and is arranged between the first glass plate and a second glass plate to be used for obtaining laminated glass.

In a specific aspect of the interlayer film according to the present invention, the interlayer film is arranged between a first glass plate and a second glass plate and being used for obtaining laminated glass, and the sum of the

thickness of the first glass plate and the thickness of the second glass plate is 3.5 mm or less.

According to a broad aspect of the present invention, there is provided laminated glass including a first lamination glass member, a second lamination glass member and the interlayer film for laminated glass described above, the interlayer film for laminated glass being arranged between the first lamination glass member and the second lamination glass member.

In a specific aspect of the laminated glass according to the present invention, the first lamination glass member is a first glass plate, and the thickness of the first glass plate is 1.6 mm or less.

In a specific aspect of the laminated glass according to the present invention, the first lamination glass member is a first glass plate, the second lamination glass member is a second glass plate, and the sum of the thickness of the first glass plate and the thickness of the second glass plate is 3.5 mm or less.

## EFFECT OF THE INVENTION

With regard to the interlayer film for laminated glass according to the present invention, since the shear storage equivalent elastic modulus is 10 MPa or more and 500 MPa or less in a temperature region of 80% or more of the temperature region of 0°C or more and 60°C or less, the value obtained by dividing a shear storage equivalent elastic modulus at 10°C by a shear storage equivalent elastic modulus at 50°C is 1 or more and 10 or less, the glass transition temperature falls within the range of - 25°C or more and 0°C or less, and the largest value of tan $\delta$ in a temperature region of -50°C or more and 0°C or less is 0.1 or more and 1 or less, the flexural rigidity of laminated glass prepared with the interlayer film can be enhanced over a wide temperature range and the sound insulating properties of the laminated glass can be enhanced over a wide temperature range.

## BRIEF DESCRIPTION OF DRAWINGS

[Fig. 1] Fig. 1 is a sectional view schematically showing an interlayer film for laminated glass in accordance with a first embodiment of the present invention.

[Fig. 2] Fig. 2 is a sectional view schematically showing an interlayer film for laminated glass in accordance with a second embodiment of the present invention.

[Fig. 3] Fig. 3 is a sectional view schematically showing an example of laminated glass prepared with the interlayer film for laminated glass shown in Fig. 1.

[Fig. 4] Fig. 4 is a sectional view schematically showing an example of laminated glass prepared with the interlayer film for laminated glass shown in Fig. 2.

[Fig. 5] Fig. 5 is a schematic view for illustrating a measurement method for the flexural rigidity.

## MODE(S) FOR CARRYING OUT THE INVENTION

Hereinafter, the present invention will be described in detail.

The interlayer film for laminated glass (hereinafter, sometimes described as the interlayer film) according to the present invention has a one-layer structure or a two or more-layer structure. The interlayer film according to the present invention may have a one-layer structure and may have a two or more-layer structure. The interlayer film according to the present invention may have a two-layer structure and may have a three or more-layer structure. The interlayer film according to the present invention is provided with a first layer. The interlayer film according to the present invention may be a single-layered interlayer film provided with only the first layer and may be a multi-layered interlayer film provided with the first layer and another layer.

The interlayer film according to the present invention is measured for a shear storage equivalent elastic modulus in a temperature region of 0°C or more and 60°C or less. In the interlayer film according to the present invention, the shear storage equivalent elastic modulus is 10 MPa or more and 500 MPa or less in a temperature region of 80% or more of the temperature region of 0°C or more and 60°C or less.

Furthermore, in the interlayer film according to the present invention, the value obtained by dividing a shear storage equivalent elastic modulus at 10°C by a shear storage equivalent elastic modulus at 50°C (the shear storage equivalent elastic modulus at 10°C/the shear storage equivalent elastic modulus at 50°C) is 1 or more and 10 or less.

Furthermore, in the interlayer film according to the present invention, the glass transition temperature falls within the range of -25°C or more and 0°C or less. Furthermore, in the interlayer film according to the present invention, the largest value of tan $\delta$ in a temperature region of -50°C or more and 0°C or less of 0.1 or more and 1 or less.

Since the interlayer film according to the present invention is provided with the above-mentioned configuration, the flexural rigidity of laminated glass prepared with the interlayer film can be enhanced over a wide temperature range.

Moreover, for obtaining laminated glass, there are many cases in which the interlayer film is arranged between a first glass plate and a second glass plate. Even when the thickness of a first glass plate is thinned, by the use of the interlayer film according to the present invention, the flexural rigidity of laminated glass can be sufficiently enhanced. Moreover, even when the thicknesses of both a first glass plate and a second glass plate are thinned, by the use of the interlayer film according to the present invention, the flexural rigidity of laminated glass can be sufficiently enhanced. In this connection, when the thicknesses of both a first glass plate and a second glass plate are thickened, the flexural rigidity of laminated glass is further enhanced.

In a conventional interlayer film, it is difficult to sufficiently enhance the flexural rigidity over a wide temperature range including high temperatures and low temperatures. For example, there are a case where the flexural rigidity at a high temperature is high and the flexural rigidity at a low temperature is low and a case where the flexural rigidity at a low temperature is high and the flexural rigidity at a high temperature is low. In contrast, in the present invention, over a wide temperature range (for example, at 10°C, 20°C and 50°C), the flexural rigidity can be enhanced.

Furthermore, since the interlayer film according to the present invention is provided with the above-mentioned configuration, the sound insulating properties of laminated glass prepared with the interlayer film can be enhanced over a wide temperature range. In a conventional interlayer film, it is difficult to sufficiently enhance the sound insulating properties over a wide temperature range including high temperatures and low temperatures. For example, there are a case where the sound insulating properties at a high temperature are high and the sound insulating properties at a low temperature are low and a case where the sound insulating properties at a low temperature are high and the sound insulating properties at a high temperature are low. In contrast, in the present invention, over a wide temperature range (for example, at 10°C, 20°C and 50°C), the sound insulating properties can be enhanced.

Furthermore, since the interlayer film according to the present invention is provided with the above-mentioned configuration, laminated glass excellent in penetration resistance can be obtained.

For the purpose of obtaining curved laminated glass or the like, an interlayer film is sometimes applied to curved glass. Since the interlayer film according to the present invention is provided with the above-mentioned configuration, flexural lamination properties of the interlayer film can be enhanced. The flexural lamination properties mean the easiness of lamination at the time of being laminated into curved glass.

Furthermore, since the interlayer film according to the present invention is provided with the above-mentioned configuration, bubbles can also be suppressed from being contained in laminated glass. For example, at the time of preparing a sheet of laminated glass by means of an autoclave, bubbles become difficult to be generated.

The shear storage equivalent elastic modulus refers to the shear storage elastic modulus at the time of assuming that a multilayer body is a single layer. In this connection, in the case of a single layer, the shear storage equivalent elastic modulus refers to the shear storage elastic modulus of the single layer. When there is no slippage between layers, for example, the shear storage equivalent elastic modulus can be measured by directly measuring a multilayer body having a layer constitution of an interlayer film for the shear storage elastic modulus according to a general dynamic viscoelasticity measuring method.

Examples of a method for measuring the shear storage equivalent elastic modulus include a method of measuring the viscoelasticity of an interlayer film, by means of a dynamic viscoelasticity measuring apparatus "DMA+1000" available from Metravib, immediately after the interlayer film is stored for 12 hours under an environment of a room temperature of 23±2°C and a humidity of 25±5%. It is preferred that the interlayer film be cut into a size of 50 mm in length by 20 mm in width, and using the shear mode, the measurement be performed under the condition in which the temperature is increased from -50°C to 100°C at a temperature increasing rate of 2°C/minute and under the condition of a frequency of 1 Hz and a strain of 0.05%.

Moreover, the shear storage equivalent elastic modulus G'* is determined by the following Equation (X).

$$G'^* = (\Sigma i a i)/(\Sigma i a i/G' i) \quad \ldots \text{ Equation (X)}$$

Gi in the foregoing Equation (X) refers to the shear storage elastic modulus of the i-th layer in an interlayer film, and ai refers to the thickness of the i-th layer in the interlayer film. Ei means calculating the sum of numerical values of i layers.

By making the interlayer film have a shear storage equivalent elastic modulus of 10 MPa or more and 500 MPa or less in a temperature region of 80% or more of the temperature region of 0°C or more and 60°C or less, both of high flexural rigidity in a wide temperature region and high sound insulating properties in a wide temperature region can be attained.

When the shear storage equivalent elastic modulus is low, there is a tendency for the flexural rigidity to be lowered. When the shear storage equivalent elastic modulus is high, sound is aurally sensitively recognized because the coincidence frequency is made to shift to the low frequency side and there is a tendency for the sound insulating

properties to be deteriorated, furthermore, the flexibility is lowered, and there is also a tendency for the penetration resistance and flexural lamination properties to be lowered. Furthermore, when the shear storage equivalent elastic modulus at 40°C or more and 60°C or less falls within the above-mentioned range, the bubble formation at the time of using an autoclave can be suppressed.

From the viewpoint of attaining flexural rigidity further enhanced over a wide temperature range and sound insulating properties further enhanced over a wide temperature range, it is preferred that the interlayer film be made to have a shear storage equivalent elastic modulus of 10 MPa or more and 400 MPa or less in a temperature region of 80% or more of the temperature region of 0°C or more and 60°C or less.

The above-mentioned value (the shear storage equivalent elastic modulus at 10°C/the shear storage equivalent elastic modulus at 50°C) is 1 or more, preferably 2 or more, 10 or less, preferably 9 or less and more preferably 5 or less. When the ratio is the above lower limit or more and the above upper limit or less, the flexural rigidity is further enhanced over a wide temperature range and the sound insulating properties are further enhanced over a wide temperature range.

It is preferred that the interlayer film according to the present invention have a glass transition temperature falling within the range of -25°C or more and 0°C or less. It is more preferred that the interlayer film according to the present invention have a glass transition temperature falling within the range of -20°C or more and 0°C or less. When the glass transition temperature is the above lower limit or more and the above upper limit or less, the glass transition temperature can be set to a temperature corresponding to the coincidence frequency based on the time-temperature conversion law, and the sound insulating properties can be improved. Moreover, by being made to become applicable to high velocity, the high-velocity impact energy-absorbing properties are enhanced and the penetration resistance is enhanced.

Examples of a method for measuring the glass transition temperature include a method of measuring the viscoelasticity of an interlayer film, by means of a dynamic viscoelasticity measuring apparatus "DMA+1000" available from Metravib, immediately after the interlayer film obtained is stored for 12 hours under an environment of a room temperature of 23±2°C and a humidity of 25±5%. It is preferred that the interlayer film be cut into a size of 50 mm in length by 20 mm in width and be measured, using the shear mode, for the glass transition temperature under the condition in which the temperature is increased from - 50°C to 100°C at a temperature increasing rate of 2°C/minute and under the condition of a frequency of 1 Hz and a strain of 0.05%.

The largest value of tan δ in a temperature region of -50°C or more and 0°C or less is 0.1 or more, preferably 0.11 or more, 1 or less, preferably 0.8 or less and more preferably 0.6 or less. When the largest value of tan δ is the above lower limit or more, the sound insulating properties, penetration resistance and flexural lamination properties are effectively enhanced because the energy loss ability is enhanced. When the largest value of tan δ is the above upper limit or less, the shear storage equivalent elastic modulus is moderately enhanced and the flexural rigidity and the penetration resistance are effectively enhanced.

It is preferred that the interlayer film have a value of tan δ of 0.1 or more in a temperature region of 10% or more of the temperature region of -50°C or more and 0°C or less. In this case, sound insulating properties in a temperature region ranging from a low temperature to room temperature (23°C) are effectively enhanced.

The interlayer film may have a two or more-layer structure and may be provided with a second layer in addition to a first layer. It is preferred that the interlayer film be further provided with a second layer. When the interlayer film is provided with the second layer, the first layer is arranged on a first surface side of the first layer.

The interlayer film may have a three or more-layer structure and may be provided with a third layer in addition to a first layer and a second layer. It is preferred that the interlayer film be further provided with a third layer. When the interlayer film is provided with the second layer and the third layer, the third layer is arranged on a second surface side opposite to the first surface of the first layer.

It is preferred that a surface on a side opposite to the first layer side of the second layer be a surface on which a lamination glass member or a glass plate is layered. The thickness of a glass plate layered on the second layer is preferably 1.6 mm or less and more preferably 1.3 mm or less. A second surface on a side opposite to a first surface (surface at the second layer side) of the first layer may be a surface on which a lamination glass member or a glass plate is layered. The thickness of a glass plate layered on the first layer is preferably 1.6 mm or less and more preferably 1.3 mm or less. It is preferred that a surface on a side opposite to the first layer side of the third layer be a surface on which a lamination glass member or a glass plate is layered. The thickness of a glass plate layered on the third layer is preferably 1.6 mm or less and more preferably 1.3 mm or less.

The interlayer film is arranged between a first glass plate and a second glass plate to be suitably used for obtaining laminated glass. Since the flexural rigidity can be sufficiently enhanced by virtue of the interlayer film, the sum of the thickness of the first glass plate and the thickness of the second glass plate is preferably 3.5 mm or less and more preferably 3 mm or less. The interlayer film is arranged between a first glass plate and a second glass plate to be suitably used for obtaining laminated glass. Since the flexural rigidity can be sufficiently enhanced by virtue of the interlayer film, the interlayer film is used together with a first glass plate having a thickness of 1.6 mm or less (preferably 1.3 mm or

less) and is arranged between the first glass plate and a second glass plate to be suitably used for obtaining laminated glass. Since the flexural rigidity can be sufficiently enhanced by virtue of the interlayer film, the interlayer film is used together with a first glass plate having a thickness of 1.6 mm or less (preferably 1.3 mm or less) and a second glass plate having a thickness of 1.6 mm or less (preferably 1.3 mm or less) and is arranged between the first glass plate and the second glass plate to be more suitably used for obtaining laminated glass.

Hereinafter, specific embodiments of the present invention will be described with reference to the drawings.

Fig. 1 shows an interlayer film for laminated glass in accordance with a first embodiment of the present invention schematically represented as a sectional view.

An interlayer film 11 shown in Fig. 1 is a multi-layered interlayer film having a two or more-layer structure. The interlayer film 11 is used for obtaining laminated glass. The interlayer film 11 is an interlayer film for laminated glass. The interlayer film 11 is provided with a first layer 1, a second layer 2 and a third layer 3. The second layer 2 is arranged on a first surface la of the first layer 1 to be layered thereon. The third layer 3 is arranged on a second surface 1b opposite to the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the interlayer film 11 has a multilayer structure (a second layer 2/a first layer 1/a third layer 3) in which the second layer 2, the first layer 1 and the third layer 3 are layered in this order.

In this connection, additional layers may be arranged between the second layer 2 and the first layer 1 and between the first layer 1 and the third layer 3, respectively. It is preferred that each of the second layer 2 and the third layer 3 be directly layered on the first layer 1. Examples of the additional layer include a layer containing polyethylene terephthalate and the like.

Fig. 2 shows an interlayer film for laminated glass in accordance with a second embodiment of the present invention schematically represented as a sectional view.

An interlayer film 11A shown in Fig. 2 is a single-layered interlayer film having a one-layer structure. The interlayer film 11A is a first layer. The interlayer film 11A is used for obtaining laminated glass. The interlayer film 11A is an interlayer film for laminated glass.

Hereinafter, the details of the first layer, the second layer and the third layer which constitute the interlayer film according to the present invention, and the details of each ingredient contained in the first layer, the second layer and the third layer will be described.

(Resin)

It is preferred that the interlayer film, the first layer, the second layer and the third layer contain a resin. Examples of the resin include a thermosetting resin and a thermoplastic resin.

The weight average molecular weight of the resin is preferably 30000 or more, more preferably 100000 or more, further preferably 120000 or more, preferably 1500000 or less, more preferably 1300000 or less, further preferably 1200000 or less, especially preferably 7500000 or less and most preferably 450000 or less. When the weight average molecular weight is the above lower limit or more and the above upper limit or less, an interlayer film can be easily obtained by extrusion molding, furthermore, the shear storage equivalent elastic modulus is made moderate, and the flexural lamination properties and the foaming inhibition properties are further improved.

The weight average molecular weight refers to a weight average molecular weight, calculated in terms of polystyrene, measured by gel permeation chromatography (GPC).

It is preferred that the resin be a thermoplastic resin, it is preferred that the resin be constituted of a polyvinyl acetal resin, an acrylic polymer, an urethane polymer, a silicone polymer, a kind of rubber or a vinyl acetate polymer, it is more preferred that the resin be constituted of a polyvinyl acetal resin or an acrylic polymer, and it is further preferred that the resin be constituted of a polyvinyl acetal resin. By the use of the polyvinyl acetal resin, the toughness is effectively enhanced and the penetration resistance is further enhanced. One kind of the thermoplastic resin may be used alone, and two or more kinds thereof may be used in combination.

From the viewpoint of effectively enhancing the rigidity, sound insulating properties, penetration resistance, flexural lamination properties and foaming inhibition properties, it is preferred that the interlayer film include a polyvinyl acetal resin or an acrylic polymer. In this case, only one among a polyvinyl acetal resin and an acrylic polymer may be used, and both of a polyvinyl acetal resin and an acrylic polymer may be used. From the viewpoint of effectively enhancing the rigidity, sound insulating properties, penetration resistance, flexural lamination properties and foaming inhibition properties, it is preferred that the interlayer film include a polyvinyl acetal resin, and it is preferred that the interlayer film include an acrylic polymer.

The interlayer film may include a polyvinyl acetal resin and a thermoplastic resin other than the polyvinyl acetal resin. The interlayer film may include a thermoplastic resin other than the acrylic polymer and an acrylic polymer. As the combination in the case of using two or more kinds of the thermoplastic resin together, it is especially preferred that the

interlayer film include a polyvinyl acetal resin and an acrylic polymer. When two or more kinds of the thermoplastic resin are used together, the performance balance can be easily adjusted, and the rigidity, sound insulating properties, penetration resistance, flexural lamination properties and foaming inhibition properties can be effectively enhanced. In particular, by the combination of a polyvinyl acetal resin and an acrylic polymer, the performance can be further enhanced.

From the viewpoint of effectively enhancing the rigidity, sound insulating properties, penetration resistance, flexural lamination properties and foaming inhibition properties, it is preferred that the polyvinyl acetal resin be constituted of a polyvinyl acetoacetal resin or a polyvinyl butyral resin. In the present specification, examples of the polyvinyl acetal resin include an acetoacetalized resin.

It is preferred that the resin have a polar group and it is preferred that the resin have a hydroxyl group. By virtue of the existence of such a group, the interlayer film is not only made tough but also further enhanced in adhesivity between the interlayer film and a lamination glass member and further enhanced in flexural rigidity and penetration resistance.

It is preferred that the acrylic polymer be a polymer of a polymerization component containing a (meth)acrylic acid ester. It is preferred that the acrylic polymer be a poly(meth)acrylic acid ester.

The poly(meth)acrylic acid ester is not particularly limited. Examples of the poly(meth)acrylic acid ester include poly(methyl (meth)acrylate), poly(ethyl (meth)acrylate), poly(n-propyl (meth)acrylate), poly(i-propyl (meth)acrylate), poly(n-butyl (meth)acrylate), poly(i-butyl (meth)acrylate), poly(t-butyl (meth)acrylate), poly(2-ethylhexyl (meth)acrylate), poly(2-hydroxyethyl (meth)acrylate), poly(4-hydroxybutyl (meth)acrylate), poly(glycidyl (meth)acrylate), poly(octyl (meth)acrylate), poly(propyl (meth)acrylate), poly(2-ethyloctyl (meth)acrylate), poly(nonyl (meth)acrylate), poly(isononyl (meth)acrylate), poly(decyl (meth)acrylate), poly(isodecyl (meth)acrylate), poly(lauryl (meth)acrylate), poly(isotetradecyl (meth)acrylate), poly(cyclohexyl (meth)acrylate), poly(benzyl (meth)acrylate), and the like. Moreover, examples of (meth)acrylic acid, which has a polar group, or a (meth)acrylic acid ester having a polar group, include (meth)acrylic acid, 2-hydroxyethyl (meth)acrylate, 4-hydroxybutyl (meth)acrylate, glycidyl (meth)acrylate, and the like. Of these, a polyacrylic acid ester is preferred and poly(ethyl acrylate), poly(n-butyl acrylate), poly(2-ethylhexyl acrylate) or poly(octyl acrylate) is more preferred because the temperature showing the maximum value of the loss tangent can be easily controlled within a moderate range in a dynamic viscoelastic spectrum. By the use of these preferred poly(meth)acrylic acid esters, the productivity of the interlayer film and the balance of characteristics of the interlayer film are further improved. One kind of the poly (meth) acrylic acid ester may be used alone, and two or more kinds thereof may be used in combination.

The thermoplastic resin may have a crosslinked structure. By making the thermoplastic resin have a crosslinked structure, the shear storage equivalent elastic modulus can be controlled and an interlayer film having both excellent flexibility and high strength can be prepared. Examples of a method for making the thermoplastic resin have a crosslinkage include a method of previously introducing functional groups reactive with each other into the polymer structure of the resin to form a crosslinkage, a method of using a crosslinking agent having two or more functional groups reactive against functional groups existing in the polymer structure of the resin to make the thermoplastic resin have a crosslinkage, a method of using a radical generator having hydrogen extracting performance such as a peroxide to make the polymer have a crosslinkage, a method of making the thermoplastic resin have a crosslinkage by electron beam irradiation, and the like. Of these, a method of previously introducing functional groups reactive with each other into the polymer structure of the resin to form a crosslinkage is suitable because the shear storage equivalent elastic modulus is easily controlled and the productivity of the interlayer film is enhanced.

It is preferred that the first layer contain a thermoplastic resin (hereinafter, sometimes described as a thermoplastic resin (1)), and it is preferred that the first layer contain a polyvinyl acetal resin (hereinafter, sometimes described as a polyvinyl acetal resin (1)) as the thermoplastic resin (1). It is preferred that the second layer contain a thermoplastic resin (hereinafter, sometimes described as a thermoplastic resin (2)), and it is preferred that the second layer contain a polyvinyl acetal resin (hereinafter, sometimes described as a polyvinyl acetal resin (2)) as the thermoplastic resin (2). It is preferred that the third layer contain a thermoplastic resin (hereinafter, sometimes described as a thermoplastic resin (3)), and it is preferred that the third layer contain a polyvinyl acetal resin (hereinafter, sometimes described as a polyvinyl acetal resin (3)) as the thermoplastic resin (3). Although the polyvinyl acetal resin (1), the polyvinyl acetal resin (2) and the polyvinyl acetal resin (3) may be the same as or different from one another, it is preferred that the polyvinyl acetal resin (1) be different from the polyvinyl acetal resin (2) and the polyvinyl acetal resin (3) because the sound insulating properties are further enhanced. The thermoplastic resin (1), the thermoplastic resin (2) and the thermoplastic resin (3) may be the same as or different from one another. One kind of each of the polyvinyl acetal resin (1), the polyvinyl acetal resin (2) and the polyvinyl acetal resin (3) may be used alone, and two or more kinds thereof may be used in combination. One kind of each of the thermoplastic resin (1), the thermoplastic resin (2) and the thermoplastic resin (3) may be used alone, and two or more kinds thereof may be used in combination.

Examples of the thermoplastic resin include a polyvinyl acetal resin, a polyacrylic resin, an ethylenevinyl acetate copolymer resin, an ethylene-acrylic acid copolymer resin, a polyurethane resin, a polyvinyl alcohol resin, and the like. Thermoplastic resins other than these may be used.

For example, the polyvinyl acetal resin can be produced by acetalizing polyvinyl alcohol with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally falls within the range of 70 to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more, preferably 5000 or less, more preferably 4000 or less and further preferably 3500 or less. When the average polymerization degree is the above lower limit or more, the penetration resistance and flexural rigidity of laminated glass are further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

It is preferred that the number of carbon atoms of the acetal group in the polyvinyl acetal resin fall within the range of 2 to 10, it is more preferred that the number of carbon atoms fall within the range of 2 to 5, and it is further preferred that the number of carbon atoms be 2, 3 or 4. Moreover, it is preferred that the number of carbon atoms of the acetal group in the polyvinyl acetal resin be 2 or 4, and in this case, the polyvinyl acetal resin is efficiently produced.

In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Of these, acetaldehyde, propionaldehyde, n-butyraldehyde, isobutyraldehyde, n-hexylaldehyde or n-valeraldehyde is preferred, acetaldehyde, propionaldehyde, n-butyraldehyde, isobutyraldehyde or n-valeraldehyde is more preferred, and acetaldehyde, n-butyraldehyde or n-valeraldehyde is further preferred. One kind of the aldehyde may be used alone, and two or more kinds thereof may be used in combination.

In the case of using the polyvinyl acetal resin (1) as a portion of a single-layered interlayer film, the content of the hydroxyl group (the amount of hydroxyl groups) of the polyvinyl acetal resin (1) is preferably 25% by mole or more, more preferably 28% by mole or more, even more preferably 30% by mole or more, further preferably 31.5% by mole or more, still further preferably 32% by mole or more, especially preferably 33% by mole or more, preferably 37% by mole or less, more preferably 36.5% by mole or less and further preferably 36% by mole or less. When the content of the hydroxyl group is the above lower limit or more, the flexural rigidity is further enhanced and the adhesive force of the interlayer film is further enhanced. Moreover, when the content of the hydroxyl group is the above upper limit or less, the flexibility of the interlayer film is enhanced and the handling of the interlayer film is facilitated.

The content of the hydroxyl group (the amount of hydroxyl groups) of the polyvinyl acetal resin (1) is preferably 17% by mole or more, more preferably 20% by mole or more, further preferably 22% by mole or more, preferably 28% by mole or less, more preferably 27% by mole or less, further preferably 25% by mole or less and especially preferably 24% by mole or less. In the case of using the polyvinyl acetal resin (1) as a portion of a multi-layered interlayer film, in particular, it is preferred that the content of the hydroxyl group satisfy the requirement on the lower limit and upper limit thereof. When the content of the hydroxyl group is the above lower limit or more, the mechanical strength of the interlayer film is further enhanced. In particular, when the content of the hydroxyl group of the polyvinyl acetal resin (1) is 20% by mole or more, the resin is high in reaction efficiency and is excellent in productivity, and moreover, when being 28% by mole or less, the sound insulating properties of laminated glass are further enhanced. Moreover, when the content of the hydroxyl group is the above upper limit or less, the flexibility of the interlayer film is enhanced and the handling of the interlayer film is facilitated. In particular, although there is a tendency for laminated glass prepared with an interlayer film in which the content of the hydroxyl group of the polyvinyl acetal resin (1) is 28% by mole or less to become low in flexural rigidity, by virtue of the configuration of the present invention, the flexural rigidity can be significantly improved.

The content of the hydroxyl group of each of the polyvinyl acetal resin (2) and the polyvinyl acetal resin (3) is preferably 25% by mole or more, more preferably 28% by mole or more, even more preferably 30% by mole or more, further preferably 31.5% by mole or more, still further preferably 32% by mole or more, especially preferably 33% by mole or more, preferably 37% by mole or less, more preferably 36.5% by mole or less and further preferably 36% by mole or less. When the content of the hydroxyl group is the above lower limit or more, the flexural rigidity is further enhanced and the adhesive force of the interlayer film is further enhanced. Moreover, when the content of the hydroxyl group is the above upper limit or less, the flexibility of the interlayer film is enhanced and the handling of the interlayer film is facilitated.

From the viewpoint of further enhancing the sound insulating properties, it is preferred that the content of the hydroxyl group of the polyvinyl acetal resin (1) be lower than the content of the hydroxyl group of the polyvinyl acetal resin (2). From the viewpoint of still further enhancing the sound insulating properties, the absolute value of the difference between the content of the hydroxyl group of the polyvinyl acetal resin (1) and the content of the hydroxyl group of the polyvinyl acetal resin (2) is preferably 1% by mole or more, more preferably 5% by mole or more, further preferably 9% by mole or more, especially preferably 10% by mole or more and most preferably 12% by mole or more. The absolute

value of the difference between the content of the hydroxyl group of the polyvinyl acetal resin (1) and the content of the hydroxyl group of the polyvinyl acetal resin (2) is preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (1) is preferably 0.01% by mole or more, more preferably 0.1% by mole or more, further preferably 7% by mole or more, still further preferably 9% by mole or more, preferably 30% by mole or less, more preferably 25% by mole or less and further preferably 24% by mole or less. When the acetylation degree is the above lower limit or more, the compatibility between the polyvinyl acetal resin and a plasticizer or another thermoplastic resin is enhanced, the resulting laminated glass is further excellent in sound insulating properties and penetration resistance, and the performance is further stabilized over a long period of time. When the acetylation degree is the above upper limit or less, with regard to the interlayer film and laminated glass, the moisture resistance thereof is enhanced. In particular, when the acetylation degree of the polyvinyl acetal resin (1) is 0.1% by mole or more and 25% by mole or less, the resulting laminated glass is excellent in penetration resistance.

The acetylation degree of each of the polyvinyl acetal resin (2) and the polyvinyl acetal resin (3) is preferably 0.01% by mole or more, more preferably 0.5% by mole or more, preferably 10% by mole or less and more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (1) (the butyralization degree in the case of a polyvinyl butyral resin) is preferably 47% by mole or more, more preferably 60% by mole or more, preferably 85% by mole or less, more preferably 80% by mole or less and further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 55% by mole or more, more preferably 60% by mole or more, preferably 75% by mole or less and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

From the viewpoint of further improving the penetration resistance of laminated glass, it is preferred that the polyvinyl acetal resin (1) be a polyvinyl acetal resin (A) with an acetylation degree (a) of less than 8% by mole and an acetalization degree (a) of 65% by mole or more or a polyvinyl acetal resin (B) with an acetylation degree (b) of 8% by mole or more. Each of the polyvinyl acetal resin (2) and the polyvinyl acetal resin (3) may be the polyvinyl acetal resin (A) and may be the polyvinyl acetal resin (B).

The acetylation degree (a) of the polyvinyl acetal resin (A) is less than 8% by mole, preferably 7.9% by mole or less, more preferably 7.8% by mole or less, further preferably 6.5% by mole or less, especially preferably 6% by mole or less, preferably 0.1% by mole or more, more preferably 0.5% by mole or more, further preferably 0.7% by mole or more and especially preferably 1% by mole or more. When the acetylation degree (a) is 0.1% by mole or more and less than 8% by mole, the resulting laminated glass is further excellent in penetration resistance, the transfer of a plasticizer can be easily controlled and the sound insulating properties of laminated glass are further enhanced. The acetylation

degree (a) may be 5% by mole or more and may be 1% by mole or more.

The acetalization degree (a) of the polyvinyl acetal resin (A) is 64% by mole or more, preferably 65% by mole or more, more preferably 66% by mole or more, further preferably 67% by mole or more, still further preferably 67.5% by mole or more, especially preferably 68% by mole or more, preferably 85% by mole or less, more preferably 84% by mole or less, further preferably 83% by mole or less and especially preferably 82% by mole or less. The acetalization degree (a) may be 75% by mole or less. When the acetalization degree (a) is the above lower limit or more, the sound insulating properties of laminated glass are further enhanced. When the acetalization degree (a) is the above upper limit or less, the reaction time required for producing the polyvinyl acetal resin (A) can be shortened.

The content (a) of the hydroxyl group of the polyvinyl acetal resin (A) is preferably 18% by mole or more, more preferably 19% by mole or more, further preferably 20% by mole or more, especially preferably 21% by mole or more, most preferably 23% by mole or more, preferably 37% by mole or less, more preferably 36% by mole or less, further preferably 35% by mole or less and especially preferably 34% by mole or less. When the content (a) of the hydroxyl group is the above lower limit or more, the resulting laminated glass is further excellent in foaming inhibition properties, and the adhesive force of the second layer to the first layer is further enhanced when the first layer is directly layered on the second layer. When the content (a) of the hydroxyl group is the above upper limit or less, the sound insulating properties of laminated glass are further enhanced. The content (a) of the hydroxyl group may be 31% by mole or less, may be 30% by mole or less, may be 29% by mole or less and may be 28% by mole or less.

The acetylation degree (b) of the polyvinyl acetal resin (B) is 8% by mole or more, preferably 9% by mole or more, more preferably 9.5% by mole or more, further preferably 10% by mole or more, especially preferably 10.5% by mole or more, preferably 30% by mole or less, more preferably 28% by mole or less, further preferably 26% by mole or less and especially preferably 24% by mole or less. When the acetylation degree (b) is the above lower limit or more, the sound insulating properties of laminated glass are further enhanced. When the acetylation degree (b) is the above upper limit or less, the reaction time required for producing the polyvinyl acetal resin (B) can be shortened.

The acetalization degree (b) of the polyvinyl acetal resin (B) is preferably 50% by mole or more, more preferably 53% by mole or more, further preferably 55% by mole or more, especially preferably 60% by mole or more, preferably 78% by mole or less, more preferably 75% by mole or less, further preferably 72% by mole or less and especially preferably 70% by mole or less. When the acetalization degree (b) is the above lower limit or more, the sound insulating properties of laminated glass are further enhanced. When the acetalization degree (b) is the above upper limit or less, the reaction time required for producing the polyvinyl acetal resin (B) can be shortened.

The content (b) of the hydroxyl group of the polyvinyl acetal resin (B) is preferably 18% by mole or more, more preferably 19% by mole or more, further preferably 20% by mole or more, especially preferably 21% by mole or more, most preferably 23% by mole or more, preferably 31% by mole or less, more preferably 30% by mole or less, further preferably 29% by mole or less and especially preferably 28% by mole or less. When the content (b) of the hydroxyl group is the above lower limit or more, the adhesive force of the second layer to the first layer is further enhanced when the first layer is directly layered on the second layer. When the content (b) of the hydroxyl group is the above upper limit or less, the sound insulating properties of laminated glass are further enhanced.

It is preferred that each of the polyvinyl acetal resin (A) and the polyvinyl acetal resin (B) be constituted of a polyvinyl acetoacetal resin or a polyvinyl butyral resin.

(Plasticizer)

It is preferred that the first layer (including a single-layered interlayer film) contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By the use of the plasticizer or by using a polyvinyl acetal resin and a plasticizer together, the resulting laminated glass is further excellent in penetration resistance, and the adhesive force of a layer containing the polyvinyl acetal resin and the plasticizer to a lamination glass member or another layer is moderately enhanced. The plasticizer is not particularly limited. The plasticizer (1), the plasticizer (2) and the plasticizer (3) may be the same as or different from one another. One kind of each of the plasticizer (1), the plasticizer (2) and the plasticizer (3) may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Of these, organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

[Chemical 1]

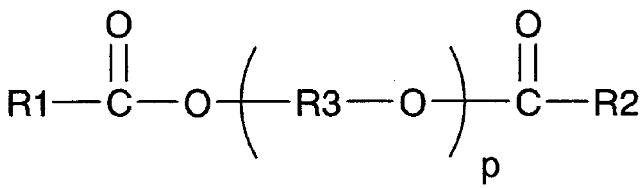

···(1)

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate, it is more preferred that the plasticizer include triethylene glycol di-2-ethylhexanoate or triethylene glycol di-2-ethylbutyrate, and it is further preferred that the plasticizer include triethylene glycol di-2-ethylhexanoate.

Each of the content of the plasticizer (2) (hereinafter, sometimes described as the content (2)) relative to 100 parts by weight of the thermoplastic resin (2) (100 parts by weight of a polyvinyl acetal resin (2) when the thermoplastic resin (2) is the polyvinyl acetal resin (2)) and the content of the plasticizer (3) (hereinafter, sometimes described as the content (3)) relative to 100 parts by weight of the thermoplastic resin (3) (100 parts by weight of a polyvinyl acetal resin (3) when the thermoplastic resin (3) is the polyvinyl acetal resin (3)) is preferably 10 parts by weight or more, more preferably 15 parts by weight or more, preferably 40 parts by weight or less, more preferably 35 parts by weight or less, further preferably 32 parts by weight or less and especially preferably 30 parts by weight or less. When the content (2) and the content (3) are the above lower limit or more, the flexibility of the interlayer film is enhanced and the handling of the interlayer film is facilitated. When the content (2) and the content (3) are the above upper limit or less, the flexural rigidity is further enhanced.

The content of the plasticizer (1) (hereinafter, sometimes described as the content (1)) relative to 100 parts by weight of the thermoplastic resin (1) (100 parts by weight of a polyvinyl acetal resin (1) when the thermoplastic resin (1) is the polyvinyl acetal resin (1)) is preferably 1 part by weight or more, more preferably 3 parts by weight or more, further preferably 5 parts by weight or more, preferably 90 parts by weight or less, more preferably 85 parts by weight or less and further preferably 80 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced. The content of the plasticizer (1) relative to 100 parts by weight of the thermoplastic resin (1) may be 50 parts by weight or more, may be 55 parts by weight or more and may be 60 parts by weight or more.

When the interlayer film is a two or more-layered interlayer film, for the purpose of enhancing the sound insulating properties of laminated glass, it is preferred that the content (1) be greater than the content (2) and it is preferred that the content (1) be greater than the content (3). In particular, although there is a tendency for laminated glass prepared

with an interlayer film in which the content (1) is 55 parts by weight or more to become low in flexural rigidity, by virtue of the configuration of the present invention, the flexural rigidity can be significantly improved.

From the viewpoint of further enhancing the sound insulating properties of laminated glass, each of the absolute value of the difference between the content (2) and the content (1) and the absolute value of the difference between the content (3) and the content (1) is preferably 10 parts by weight or more, more preferably 15 parts by weight or more and further preferably 20 parts by weight or more. Each of the absolute value of the difference between the content (2) and the content (1) and the absolute value of the difference between the content (3) and the content (1) is preferably 80 parts by weight or less, more preferably 75 parts by weight or less and further preferably 70 parts by weight or less.

(Heat shielding compound)

It is preferred that the interlayer film include a heat shielding compound. It is preferred that the first layer contain a heat shielding compound. It is preferred that the second layer contain a heat shielding compound. It is preferred that the third layer contain a heat shielding compound. One kind of the heat shielding compound may be used alone, and two or more kinds thereof may be used in combination.

Ingredient X:

It is preferred that the interlayer film include at least one kind of Ingredient X among a phthalocyanine compound, a naphthalocyanine compound and an anthracyanine compound. It is preferred that the first layer contain the Ingredient X. It is preferred that the second layer contain the Ingredient X. It is preferred that the third layer contain the Ingredient X. The Ingredient X is a heat shielding compound. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of a layer containing the Ingredient X (a first layer, a second layer or a third layer), the content of the Ingredient X is preferably 0.001% by weight or more, more preferably 0.005% by weight or more, further preferably 0.01% by weight or more, especially preferably 0.02% by weight or more, preferably 0.2% by weight or less, more preferably 0.1% by weight or less, further preferably 0.05% by weight or less and especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

Heat shielding particles:

It is preferred that the interlayer film include heat shielding particles. It is preferred that the first layer contain the heat shielding particles. It is preferred that the second layer contain the heat shielding particles. It is preferred that the third layer contain the heat shielding particles. The heat shielding particle is a heat shielding compound. By the use of heat shielding particles, infrared rays (heat rays) can be effectively cut off. One kind of the heat shielding particle may be used alone, and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. As such, infrared rays are generally called heat rays. By the use of the heat shielding particles, infrared rays (heat rays) can be effectively cut off. In this connection,

the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride ($LaB_6$) particles, and the like. Heat shielding particles other than these may be used. Of these, since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: $Cs_{0.33}WO_3$.

The average particle diameter of the heat shielding particles is preferably 0.01 μm or more, more preferably 0.02 μm or more, preferably 0.1 μm or less and more preferably 0.05 μm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of a layer containing the heat shielding particles (a first layer, a second layer or a third layer), the content of the heat shielding particles is preferably 0.01% by weight or more, more preferably 0.1% by weight or more, further preferably 1% by weight or more, especially preferably 1.5% by weight or more, preferably 6% by weight or less, more preferably 5.5% by weight or less, further preferably 4% by weight or less, especially preferably 3.5% by weight or less and most preferably 3% by weight or less. When the content of the heat shielding particles is the above lower limit or more and the above upper limit or less, the heat shielding properties are sufficiently enhanced and the visible light transmittance is sufficiently enhanced.

(Metal salt)

It is preferred that the interlayer film include at least one kind of metal salt (hereinafter, sometimes described as Metal salt M) among an alkali metal salt and an alkaline earth metal salt. It is preferred that the first layer contain the Metal salt M. It is preferred that the second layer contain the Metal salt M. It is preferred that the third layer contain the Metal salt M. By the use of the Metal salt M, controlling the adhesivity between the interlayer film and a lamination glass member or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt included in the interlayer film contain at least one kind of metal among K and Mg.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The sum of the contents of Mg and K in a layer containing the Metal salt M (a first layer, a second layer or a third layer) is preferably 5 ppm or more, more preferably 10 ppm or more, further preferably 20 ppm or more, preferably 300 ppm or less, more preferably 250 ppm or less and further preferably 200 ppm or less. When the sum of the contents of Mg and K is the above lower limit or more and the above upper limit or less, the adhesivity between the interlayer film

and a lamination glass member or the adhesivity between respective layers in the interlayer film can be further well controlled.

(Ultraviolet ray screening agent)

It is preferred that the interlayer film include an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further difficult to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure, an ultraviolet ray screening agent having a benzophenone structure, an ultraviolet ray screening agent having a triazine structure, an ultraviolet ray screening agent having a malonic acid ester structure, an ultraviolet ray screening agent having an oxanilide structure, an ultraviolet ray screening agent having a benzoate structure, and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure or an ultraviolet ray screening agent having a benzoate structure, more preferably an ultraviolet ray screening agent having a benzotriazole structure or an ultraviolet ray screening agent having a benzophenone structure, and further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the ultraviolet ray screening agent having a benzotriazole structure include ultraviolet ray absorbers having a benzotriazole structure such as 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.) and 2-(2'-hydroxy-3',5'-di-amylphenyl)benzotriazole ("Tinuvin 328" available from BASF Japan Ltd.). It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray absorbing performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

From the viewpoint of further suppressing the lowering in visible light transmittance after the lapse of a certain period of time, in 100% by weight of a layer containing the ultraviolet ray screening agent (a first layer, a second layer

or a third layer), the content of the ultraviolet ray screening agent is preferably 0.1% by weight or more, more preferably 0.2% by weight or more, further preferably 0.3% by weight or more, especially preferably 0.5% by weight or more, preferably 2.5% by weight or less, more preferably 2% by weight or less, further preferably 1% by weight or less and especially preferably 0.8% by weight or less. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

(Oxidation inhibitor)

It is preferred that the interlayer film include an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butylated hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, tris(2,4-di-t-butylphenyl) phosphite, 2,2'-methylenebis(4,6-di-t-butyl-1-phenyloxy)(2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.1% by weight or more in 100% by weight of the interlayer film or in 100% by weight of a layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

(Other ingredients)

Each of the first layer, the second layer and the third layer may contain additives such as a coupling agent containing silicon, aluminum or titanium, a dispersing agent, a surfactant, a flame retardant, an antistatic agent, a kind of filler, a pigment, a dye, an adhesive force regulating agent, a moisture-resistance improving agent, a fluorescent brightening agent and an infrared ray absorber, as necessary. One kind of these additives may be used alone, and two or more kinds thereof may be used in combination.

In order to control the shear storage equivalent elastic modulus within a suitable range, the interlayer film, the first layer, the second layer and the third layer may contain a kind of filler. Examples of the filler include calcium carbonate particles, silica particles, and the like. From the viewpoint of effectively enhancing the flexural rigidity and effectively suppressing a decrease in transparency, silica particles are preferred.

In 100% by weight of a layer containing a kind of filler (a first layer, a second layer or a third layer), the content of the filler is preferably 1% by weight or more, more preferably 5% by weight or more, further preferably 10 parts by weight or more, preferably 60% by weight or less and more preferably 50% by weight or less.

(Other details of interlayer film for laminated glass)

The thickness of the interlayer film is not particularly limited. From the viewpoint of the practical aspect and the viewpoint of sufficiently enhancing the penetration resistance and the flexural rigidity of laminated glass, the thickness of the interlayer film is preferably 0.1 mm or more, more preferably 0.25 mm or more, preferably 3 mm or less and more preferably 1.5 mm or less. When the thickness of the interlayer film is the above lower limit or more, the penetration resistance and the flexural rigidity of laminated glass are further enhanced. When the thickness of the interlayer film is the above upper limit or less, the transparency of the interlayer film is further improved.
The thickness of the interlayer film is defined as T. The thickness of the first layer is preferably 0.035T or more, more preferably 0.0625T or more, further preferably 0.1T or more, preferably 0.4T or less, more preferably 0.375T or less, further preferably 0.25T or less and especially preferably 0.15T or less. When the thickness of the first layer is 0.4T or less, the flexural rigidity is further improved.
The thickness of each of the second layer and the third layer is preferably 0.3T or more, more preferably 0.3125T or more, further preferably 0.375T or more, preferably 0.97T or less, more preferably 0.9375T or less and further preferably 0.9T or less. The thickness of each of the second layer and the third layer may be 0.46875T or less and may be 0.45T or less. Moreover, when the thickness of each of the second layer and the third layer is the above lower limit or more and the above upper limit or less, the rigidity and the sound insulating properties of laminated glass are further enhanced.
The total thickness of the second layer and the third layer is preferably 0.625T or more, more preferably 0.75T or more, further preferably 0.85T or more, preferably 0.97T or less, more preferably 0.9375T or less and further preferably 0.9T or less. Moreover, when the total thickness of the second layer and the third layer is the above lower limit or more and the above upper limit or less, the rigidity and the sound insulating properties of laminated glass are further enhanced.
The production method of the interlayer film according to the present invention is not particularly limited. In the case of a single-layered interlayer film, examples of the production method of the interlayer film according to the present invention include a method of extruding a resin composition with an extruder. In the case of a multi-layered interlayer film, examples of the production method of the interlayer film according to the present invention include a method of separately forming respective resin compositions used for constituting respective layers into respective layers, and then, for example, layering the respective obtained layers, a method of coextruding respective resin compositions used for constituting respective layers with an extruder and layering the respective layers, and the like. A production method of extrusion-molding is preferred because the method is suitable for continuous production.
It is preferred that respective polyvinyl acetal resins contained in the second layer and the third layer be the same as each other, it is more preferred that respective polyvinyl acetal resins contained in the second layer and the third layer be the same as each other and respective plasticizers contained therein be the same as each other, and it is further preferred that the second layer and the third layer be formed from the same resin composition as each other since the resulting interlayer film is excellent in production efficiency.
It is preferred that at least one surface among surfaces of both sides of the interlayer film have a recess/protrusion shape. It is more preferred that surfaces of both sides of the interlayer film have a recess/protrusion shape. The method for forming the recess/protrusion shape is not particularly limited, and examples thereof include a lip embossing method, an embossing roll method, a calender roll method, a profile extrusion method, and the like. Since it is possible to quantitatively form many embosses with a recess/protrusion shape constituting a constant uneven pattern, the embossing roll method is preferred.

(Laminated glass)

Fig. 3 is a sectional view schematically showing an example of laminated glass prepared with the interlayer film for laminated glass shown in Fig. 1.
Laminated glass 31 shown in Fig. 3 is provided with a first lamination glass member 21, a second lamination glass member 22 and an interlayer film 11. The interlayer film 11 is arranged between the first lamination glass member 21 and the second lamination glass member 22 to be sandwiched therebetween.
The first lamination glass member 21 is layered on a first surface 11a of the interlayer film 11. The second lamination glass member 22 is layered on a second surface 11b opposite to the first surface 11a of the interlayer film 11. The first lamination glass member 21 is layered on an outer surface 2a of a second layer 2. The second lamination glass member 22 is layered on an outer surface 3a of a third layer 3.
Fig. 4 is a sectional view schematically showing an example of laminated glass prepared with the interlayer film for laminated glass shown in Fig. 2.
The laminated glass 31A shown in Fig. 4 is provided with a first lamination glass member 21, a second lamination glass member 22 and an interlayer film 11A. The interlayer film 11A is arranged between the first lamination glass member 21 and the second lamination glass member 22 to be sandwiched therebetween.
The first lamination glass member 21 is layered on a first surface 11a of the interlayer film 11A. The second

lamination glass member 22 is layered on a second surface 11b opposite to the first surface 11a of the interlayer film 11A.

As described above, the laminated glass according to the present invention is provided with a first lamination glass member, a second lamination glass member and an interlayer film, and the interlayer film is the interlayer film for laminated glass according to the present invention. In the laminated glass according to the present invention, the above-mentioned interlayer film is arranged between the first lamination glass member and the second lamination glass member.

It is preferred that the first lamination glass member be a first glass plate. It is preferred that the second lamination glass member be a second glass plate.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first lamination glass member and the second lamination glass member be a glass plate or a PET film, and the laminated glass be provided with a glass plate as at least one among the first lamination glass member and the second lamination glass member.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more, preferably 5 mm or less and more preferably 3 mm or less. Moreover, when the lamination glass member is a glass plate, the thickness of the glass plate is preferably 0.5 mm or more, more preferably 0.7 mm or more, preferably 5 mm or less and more preferably 3 mm or less. When the lamination glass member is a PET film, the thickness of the PET film is preferably 0.03 mm or more and preferably 0.5 mm or less.

By the use of the interlayer film according to the present invention, even when the thickness of laminated glass is thinned, the flexural rigidity of laminated glass can be maintained high. From the viewpoints of attaining reduced weight of laminated glass and decreasing the amount of the material for laminated glass to reduce the environmental load, and improving fuel consumption of an automobile by reduction in weight of laminated glass to reduce the environmental load, the thickness of the glass plate is preferably 2 mm or less, more preferably 1.8 mm or less, even more preferably 1.6 mm or less, still even more preferably 1.5 mm or less, further preferably 1.4 mm or less, even further preferably 1.3 mm or less, still further preferably 1.0 mm or less and especially preferably 0.7 mm or less. From the viewpoints of attaining reduced weight of laminated glass and decreasing the amount of the material for laminated glass to reduce the environmental load, and improving fuel consumption of an automobile by reduction in weight of laminated glass to reduce the environmental load, the sum of the thickness of the first glass plate and the thickness of the second glass plate is preferably 3.5 mm or less, more preferably 3.2 mm or less, further preferably 3 mm or less and especially preferably 2.8 mm or less.

The production method of the laminated glass is not particularly limited. For example, the interlayer film is sandwiched between the first and the second lamination glass members, and then, passed through pressure rolls or subjected to decompression suction in a rubber bag, so that the air remaining between the first and the second lamination glass members and the interlayer film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained. At the time of producing the laminated glass, a first layer, a second layer and a third layer may be layered to prepare the interlayer film.

Each of the interlayer film and the laminated glass can be used for automobiles, railway vehicles, aircraft, ships, buildings and the like. Each of the interlayer film and the laminated glass can also be used for applications other than these applications. It is preferred that the interlayer film and the laminated glass be an interlayer film and laminated glass for vehicles or for building respectively, and it is more preferred that the interlayer film and the laminated glass be an interlayer film and laminated glass for vehicles respectively. Each of the interlayer film and the laminated glass can be used for a windshield, side glass, rear glass or roof glass of an automobile, and the like. The interlayer film and the laminated glass are suitably used for automobiles. The interlayer film is used for obtaining laminated glass of an automobile.

Hereinafter, the present invention will be described in more detail with reference to examples. The present invention is not limited only to these examples.

The following materials were prepared.

(Resin)

Polyvinyl acetal resins shown in the following Tables 1 to 4 were appropriately used.

With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited. Moreover, when the kind of acetal is the acetoacetal, the acetalization degree was calculated by measuring the acetylation degree and the content of the hydroxyl group as in the case thereof, calculating the mole fraction from the measurement results obtained, and then subtracting the acetylation degree and the content of the hydroxyl group from 100% by mole.

Moreover, acrylic polymers shown in the following Tables 1 to 4 were appropriately used. Each of the acrylic polymers shown in the following Tables 1 to 4 is an acrylic polymer prepared by polymerizing a polymerization component containing ethyl acrylate, butyl acrylate, benzyl acrylate, 2-hydroxyethyl acrylate and 2-ethylhexyl acrylate in respective contents shown in the following Tables 1 to 4.

(Additive)

Silica particles ("BZ-400" available from TOSOH SILICA CORPORATION, the specific surface area by the BET method of 450 $m^2/g$)

(Plasticizer)

Triethylene glycol di-2-ethylhexanoate (3GO)

(Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

(Oxidation inhibitor)

BHT (2,6-di-t-butyl-p-cresol)

(Example 1)

Preparation of composition for forming first layer:

One hundred parts by weight of a kind of the polyvinyl acetal resin shown in the following Table 1, 70 parts by weight of a plasticizer (3GO), 0.2 parts by weight of an ultraviolet ray screening agent (Tinuvin 326) and 0.2 parts by weight of an oxidation inhibitor (BHT) were mixed to obtain a composition for forming a first layer.

Preparation of composition for forming second layer and third layer:

One hundred parts by weight of a kind of the polyvinyl acetal resin shown in the following Table 1, 20 parts by weight of a plasticizer (3GO), 0.2 parts by weight of an ultraviolet ray screening agent (Tinuvin 326) and 0.2 parts by weight of an oxidation inhibitor (BHT) were mixed to obtain a composition for forming a second layer and a third layer.

Preparation of interlayer film:

By coextruding the composition for forming a first layer and the composition for forming a second layer and a third layer using a coextruder, an interlayer film (1660 μm in thickness) having a layered structure with a stack of a second layer (800 μm in thickness)/a first layer (60 μm in thickness)/a third layer (800 μm in thickness) was prepared.

Preparation of Laminated glass A (for flexural rigidity measurement):

The interlayer film obtained was cut into a size of 20 cm in longitudinal length × 2.5 cm in transversal length. As a first lamination glass member and a second lamination glass member, two glass plates (clear float glass, 20 cm in

longitudinal length × 2.5 cm in transversal length) with respective thicknesses shown in Table 1 were prepared. The obtained interlayer film was sandwiched between the two glass plates to obtain a laminate. The obtained laminate was put into a rubber bag and the inside thereof was degassed for 20 minutes at a degree of vacuum of 2660 Pa (20 torr). Afterward, while keeping the laminate degassed, furthermore, the laminate was held in place for 30 minutes at 90°C and pressed under vacuum in an autoclave. The laminate thus preliminarily press-bonded was subjected to press-bonding for 20 minutes under conditions of 135°C and a pressure of 1.2 MPa (12 kg/cm$^2$) in an autoclave to obtain a sheet of Laminated glass A.

Preparation of Laminated glass B (for sound insulating properties measurement):

The interlayer film obtained was cut into a size of 30 cm in longitudinal length × 2.5 cm in transversal length. As a first lamination glass member and a second lamination glass member, two glass plates (clear float glass, 30 cm in longitudinal length × 2.5 cm in transversal length) with respective thicknesses shown in Table 1 were prepared. The interlayer film was sandwiched between the two glass plates to obtain a laminate. The laminate was put into a rubber bag and degassed for 20 minutes at a degree of vacuum of 2.6 kPa, after which the laminate was transferred into an oven while being degassed, and furthermore, held in place for 30 minutes at 90°C and pressed under vacuum to subject the laminate to preliminary press-bonding. The preliminarily press-bonded laminate was subjected to press-bonding for 20 minutes under conditions of 135°C and a pressure of 1.2 MPa in an autoclave to obtain a sheet of Laminated glass B.

Preparation of Laminated glass C (for penetration resistance test):

The interlayer film obtained was cut into a size of 15 cm in longitudinal length × 15 cm in transversal length. As a first lamination glass member and a second lamination glass member, two glass plates (clear float glass, 15 cm in longitudinal length × 15 cm in transversal length) with respective thicknesses shown in Table 1 were prepared. The interlayer film was sandwiched between the two glass plates to obtain a laminate. The laminate was put into a rubber bag and degassed for 20 minutes at a degree of vacuum of 2.6 kPa, after which the laminate was transferred into an oven while being degassed, and furthermore, held in place for 30 minutes at 90°C and pressed under vacuum to subject the laminate to preliminary press-bonding. The preliminarily press-bonded laminate was subjected to press-bonding for 20 minutes under conditions of 135°C and a pressure of 1.2 MPa in an autoclave to obtain a sheet of Laminated glass C.

Preparation of Laminated glass D (for foaming evaluation):

The interlayer film obtained was cut into a size of 15 cm in longitudinal length × 15 cm in transversal length. As a first lamination glass member and a second lamination glass member, two glass plates (clear float glass, 15 cm in longitudinal length × 15 cm in transversal length) with respective thicknesses shown in Table 1 were prepared. The interlayer film was sandwiched between the two glass plates to obtain a laminate. The laminate was put into a rubber bag and degassed for 20 minutes at a degree of vacuum of 2.6 kPa, after which the laminate was transferred into an oven while being degassed, and furthermore, held in place for 30 minutes at 90°C and pressed under vacuum to subject the laminate to preliminary press-bonding. The preliminarily press-bonded laminate was subjected to press-bonding for 20 minutes under conditions of 135°C and a pressure of 1.2 MPa in an autoclave to obtain a sheet of Laminated glass D.

Preparation of interlayer film and PET laminate (for flexural lamination test):

The interlayer film obtained was cut into a size of 5 cm in longitudinal length × 2.5 cm in transversal length. A sheet of a PET film having the same size and a thickness of 50 micrometers, which is not subjected to a release treatment, was prepared. This PET film and the interlayer film obtained were laminated together to obtain a laminate. The laminate obtained was held in place for 30 minutes at 90°C and pressed under vacuum in an autoclave. The laminate thus preliminarily press-bonded was subjected to press-bonding for 20 minutes under conditions of 135°C and a pressure of 1.2 MPa (12 kg/cm$^2$) in an autoclave to obtain a Laminate A.

(Examples 2 to 4 and Comparative Examples 1 to 3)

An interlayer film and a sheet of laminated glass were obtained in the same manner as that in Example 1 except that the kind and the blending amount of each of the resin, the plasticizer and the additive which are used for a composition for forming a first layer were set to those listed in the following Table 1, the kind of each of the resin used for a composition for forming a second layer and a third layer and the plasticizer and the blending amount thereof were set to those listed in the following Table 1 and the thicknesses of the first layer, the second layer, the third layer, the first lamination glass member and the second lamination glass member were set to those listed in the following Table 1. Moreover, in Examples

2 to 4 and Comparative Examples 1 to 3, each of the ultraviolet ray screening agent and the oxidation inhibitor of the same kind as that in Example 1 was blended in the same blending amount (0.2 parts by weight relative to 100 parts by weight of the thermoplastic resin) as that in Example 1.

(Example 5)

Preparation of composition for forming interlayer film:

One hundred parts by weight of a kind of the polyvinyl acetal resin shown in the following Table 2, 100 parts by weight of a kind of the resin other than the polyvinyl acetal resin (acrylic polymer) shown in the following Table 2, 0.2 parts by weight of an ultraviolet ray screening agent (Tinuvin 326) and 0.2 parts by weight of an oxidation inhibitor (BHT) were mixed to obtain a composition for forming an interlayer film.

Preparation of interlayer film:

By extruding a composition for forming an interlayer film with an extruder, a single-layered interlayer film (760 μm in thickness) was prepared.

(Examples 6 to 22 and Comparative Examples 4 to 6)

An interlayer film and a sheet of laminated glass were obtained in the same manner as that in Example 5 except that the kind of each of the resin and the plasticizer which are used for a composition for forming an interlayer film were set to those listed in the following Table 2, the thicknesses of the interlayer film, the first lamination glass member and the second lamination glass member were set to those listed in the following Table 2, and the thicknesses of the interlayer film, the first lamination glass member and the second lamination glass member were set to those listed in the following Table 2. Moreover, in Examples 6 to 22 and Comparative Examples 4 to 6, each of the ultraviolet ray screening agent and the oxidation inhibitor of the same kind as that in Example 1 was blended in the same blending amount (0.2 parts by weight relative to 100 parts by weight of the thermoplastic resin) as that in Example 1.

(Evaluation)

(0) Weight average molecular weight

The resin used for the interlayer film was measured for the weight average molecular weight by gel permeation chromatography (GPC).

(1) Equivalent viscoelasticity

Shear storage equivalent elastic modulus:

At a frequency of 1 Hz, the shear storage equivalent elastic modulus in the temperature region of 0°C or more and 30°C or less was measured. Specifically, immediately after the interlayer film obtained was stored for 12 hours under an environment of a room temperature of 23±2°C and a humidity of 25±5%, the interlayer film was cut into a size of 50 mm in length by 20 mm in width, and using the shear mode, the measurement was performed, by means of a dynamic viscoelasticity measuring apparatus "DMA+1000" available from Metravib, at a temperature increasing rate of 2°C/minute from -50°C to 100°C under the condition of a frequency of 1 Hz and a strain of 0.05%. When there is no measurement trouble by slippage between respective layers, the shear storage equivalent elastic modulus was judged according to the following criteria. When there is a trouble, each layer was measured for the viscoelasticity in the foregoing manner, and the shear storage equivalent elastic modulus was determined by calculation.

[Criteria for judgment in shear storage equivalent elastic modulus]

○○: In a temperature region of 80% or more of the temperature region of 0°C or more and 60°C or less, the shear storage equivalent elastic modulus is 10 MPa or more and 400 MPa or less.
○: The interlayer film does not satisfy the criterion of ○○, and in a temperature region of 80% or more of the temperature region of 0°C or more and 60°C or less, the shear storage equivalent elastic modulus is 10 MPa or

more and 500 MPa or less.
×: The interlayer film does not satisfy the criteria of ○○ and ○.

Moreover, a value (the shear storage equivalent elastic modulus at 10°C/the shear storage equivalent elastic modulus at 50°C) was determined. In the following tables, the ratio as a value (10°C-50°C) obtained by dividing a shear storage equivalent elastic modulus at 10°C by a shear storage equivalent elastic modulus at 50°C was written in the column.

Glass transition temperature Tg:

Immediately after the interlayer film obtained was stored for 12 hours under an environment of a room temperature of 23±2°C and a humidity of 25±5%, the interlayer film was cut into a size of 50 mm in length by 20 mm in width, and using the shear mode, the measurement was performed, by means of a dynamic viscoelasticity measuring apparatus "DMA+1000" available from Metravib, at a temperature increasing rate of 2°C/minute from -50°C to 100°C under the condition of a frequency of 1 Hz and a strain of 0.05%. In the viscoelastic spectrum obtained, with regard to the loss tangent, when a peak was observed within the range of -25°C to 0°C, the peak temperature was written in the column, and when a peak was not observed, "Not observed" was written in the column.

Largest value of tan δ in temperature region of -25°C or more and 0°C or less and tan δ in temperature region of -50°C or more and 0°C or less:

The largest value of tan δ in a temperature region of -25°C or more and 0°C or less was evaluated. Specifically, immediately after the interlayer film obtained was stored for 12 hours under an environment of a room temperature of 23±2°C and a humidity of 25±5%, the interlayer film was cut into a size of 50 mm in length by 20 mm in width, and using the shear mode, the measurement was performed, by means of a dynamic viscoelasticity measuring apparatus "DMA+1000" available from Metravib, at a temperature increasing rate of 2°C/minute from -50°C to 100°C under the condition of a frequency of 1 Hz and a strain of 0.05%. In the viscoelastic spectrum obtained, with regard to the loss tangent, when a peak was observed within the range of -25°C to 0°C, the peak value was written in the column.

Moreover, in a temperature region of 10% or more of the temperature region of -50°C or more and 0°C or less, whether the value of tan δ is 0.1 or more or not was evaluated, and the tan δ was judged according to the following criteria.

[Criteria for judgment in tan δ]

○: In a temperature region of 10% or more of the temperature region of -50°C or more and 0°C or less, the value of tan δ is 0.1 or more.
Δ: In a temperature region of 5% or more and less than 10% of the temperature region of -50°C or more and 0°C or less, the value of tan δ is 0.1 or more.
×: The interlayer film does not satisfy the criteria of ○ and Δ.

(2) Flexural rigidity

The sheet of Laminated glass A obtained was evaluated for the flexural rigidity.

The flexural rigidity was evaluated by the testing method schematically shown in Fig. 5. As a measuring apparatus, the UTA-500, which is available from ORIENTEC CORPORATION and equipped with the 3-point flexural test jig, was used. Under measurement conditions of the measurement temperature of 10°C (10°C±3°C), 20°C (20°C±3°C) or 50°C (50°C±3°C), the distance D1 of 12 cm and the distance D2 of 20 cm, a sheet of laminated glass was deformed in the F direction at a displacement rate of 1 mm/minute, and the stress at the time when the deformation amount becomes 1.5 mm was measured to calculate the flexural rigidity. The flexural rigidity was judged according to the following criteria. The higher the numerical value of the flexural rigidity is, the more excellent in flexural rigidity the sheet of laminated glass is.

[Criteria for judgment in flexural rigidity]

○: The flexural rigidity is 50 N/mm or more.
Δ: The flexural rigidity is 45 N/mm or more and less than 50 N/mm.
×: The flexural rigidity is less than 45 N/mm.

(3) Sound insulating properties

The sheet of Laminated glass B obtained was excited by means of a vibration generator for a damping test ("Vibration exciter G21-005D" available from SHINKEN CO., LTD.) to obtain vibration characteristics, the vibration characteristics were amplified by a mechanical impedance measuring apparatus ("XG-81" available from RION Co., Ltd.), and the vibration spectrum was analyzed by an FFT spectrum analyzer ("FFT analyzer HP3582A" available from Yokogawa-Hewlett-Packard Company).
From the ratio of the loss factor thus obtained to the resonance frequency of Laminated glass B, a graph showing the relationship between the sound frequency (Hz) and the sound transmission loss (dB) at each of 10°C, 20°C and 50°C was prepared to determine the minimum sound transmission loss (TL value) at a sound frequency of about 3,000 Hz. The higher this TL value is, the higher in sound insulating properties the sheet of laminated glass is. The sound insulating properties were judged according to the following criteria.

[Criteria for judgment in sound insulating properties]

○: The TL value is 35 dB or more.
Δ: The TL value is 30 dB or more and less than 35 dB.
×: The TL value is less than 30 dB.

(4) Penetration resistance

The surface temperature of the sheet of Laminated glass C obtained was adjusted to 20°C or 50°C. Then, a hard sphere with a mass of 2260 g and a diameter of 82 mm was dropped at the center part of each of six sheets of laminated glass from a height of 1.5 m. When the hard sphere did not penetrate through each of all the six sheets of laminated glass within 5 seconds after the hard sphere collided therewith, the laminated glass was determined to be acceptable. When sheets of laminated glass through each of which the hard sphere did not penetrate within 5 seconds after the hard sphere collided therewith were three or less sheets, the laminated glass was determined to be unacceptable. When sheets of laminated glass through each of which the hard sphere did not penetrate were four sheets, separately, six sheets of laminated glass were evaluated for the penetration resistance. When sheets of laminated glass through each of which the hard sphere did not penetrate were five sheets, separately, one sheet of laminated glass was additionally tested. When the hard sphere did not penetrate through the sheet of laminated glass within 5 seconds after the hard sphere collided therewith, the laminated glass was determined to be acceptable. In the same manner, the height was changed in 25 cm increments, and a hard sphere with a mass of 2260 g and a diameter of 82 mm was dropped at the center part of each of six sheets of laminated glass to evaluate the penetration resistance of laminated glass (maximum height). The penetration resistance was judged according to the following criteria.

[Criteria for judgment in penetration resistance]

○: Even when the height is equal to 2 m, the laminated glass is determined to be acceptable.
×: When the height is less than 2 m, the laminated glass is determined to be unacceptable.

(5) Foaming prevention properties

Five sheets of Laminated glass A obtained were prepared. With regard to bubbles generated in each of five sheets of laminated glass, a bubble was approximated as an ellipse, and the total area of ellipses was defined as the foaming area. An average value of five measured values of the total area of ellipses observed in each of five sheets of laminated glass was determined to determine a proportion (percentage) of the average value of the total area of ellipses (foaming area) to the area of a sheet of laminated glass (15 cm × 15 cm). The foaming prevention properties were judged according to the following criteria.

[Criteria for judgment in foaming prevention properties]

○○: In all of five sheets of laminated glass, foaming is not observed.
○: The proportion of the average value of the total area of ellipses (foaming area) is less than 5%.
Δ: The proportion of the average value of the total area of ellipses (foaming area) is 5% or more and less than 10%.
×: The proportion of the average value of the total area of ellipses (foaming area) is 10% or more.

(6) Flexural lamination properties

The Laminate A obtained was evaluated for the flexural lamination properties.

The flexural lamination properties were evaluated by the testing method schematically shown in Fig. 5. As a measuring apparatus, the UTA-500, which is available from ORIENTEC CORPORATION and equipped with the 3-point flexural test jig, was used. Under measurement conditions of the measurement temperature of 20°C (20°C±3°C), the distance D1 of 3 cm and the distance D2 of 5 cm, a sheet of laminated glass was deformed in the F direction at a displacement rate of 1 mm/minute, and the stress at the time when the deformation amount becomes 1 mm was measured to evaluate the flexural lamination properties. The flexural lamination properties were judged according to the following criteria.

[Criteria for judgment in flexural lamination properties]

○: The stress representing the flexural lamination properties is less than 3 N/mm.
Δ: The stress representing the flexural lamination properties is 3 N/mm or more and less than 3.5 N/mm.
×: The stress representing the flexural lamination properties is 3.5 N/mm or more.

The details and the results are shown in the following Tables 1 to 4. In this connection, in the following Tables 1 to 4, the description of ingredients to be blended other than the resin, the plasticizer and the silica particle which is an additive was omitted.

[Table 1]

| | | | | Example 1 | Example 2 | Example 3 | Example 4 | Comparative Example 1 | Comparative Example 2 | Comparative Example 3 |
|---|---|---|---|---|---|---|---|---|---|---|
| Configuration of laminated glass | Thickness of first lamination glass member (mm) | | | 1.0 | 1.0 | 1.0 | 1.6 | 1.0 | 1.0 | 1.0 |
| | Second layer | Polyvinyl acetal resin | Content (parts by weight) | 100 | 100 | 100 | 100 | 100 | 100 | 100 |
| | | | Average polymerization degree | 2000 | 2000 | 2000 | 500 | 2000 | 2000 | 2000 |
| | | | Content of hydroxyl group (mol%) | 30.6 | 30.6 | 30.6 | 32.5 | 30.6 | 27 | 27 |
| | | | Acetalization degree (mol%) | 68.5 | 68.5 | 68.5 | 66.3 | 68.5 | 72.5 | 72.5 |
| | | | Kind of acetal | Acetoacetal | Acetoacetal | Acetoacetal | Acetoacetal | Acetoacetal | Acetoacetal | Acetoacetal |
| | | | Acetylation degree (mol%) | 0.9 | 0.9 | 0.9 | 1.2 | 0.9 | 0.5 | 0.5 |
| | | | Weight average molecular weight | Three hundred thousand | Three hundred thousand | Three hundred thousand | One hundred thirty thousand | Three hundred thousand | Two hundred seventy thousand | Two hundred seventy thousand |
| | | Plasticizer | Kind | 3GO | 3GO | 3GO | 3GO | 3GO | 3GO | 3GO |
| | | | Content (parts by weight) | 20 | 20 | 20 | 20 | 35 | 20 | 20 |
| | | Thickness (μm) | | 800 | 400 | 330 | 360 | 330 | 800 | 800 |
| | First layer | Polyvinyl acetal resin | Content (parts by weight) | 100 | 100 | 100 | – | 100 | 100 | 100 |
| | | | Average polymerization degree | 3000 | 2500 | 800 | – | 2500 | 3000 | 3000 |
| | | | Content of hydroxyl group (mol%) | 20.8 | 20.9 | 34 | – | 20.9 | 20.8 | 20.8 |
| | | | Acetalization degree (mol%) | 55.7 | 66.6 | 65.1 | – | 66.6 | 55.7 | 55.7 |
| | | | Kind of acetal | Butyral | Butyral | Acetoacetal | – | Butyral | Butyral | Butyral |
| | | | Acetylation degree (mol%) | 23.5 | 12.5 | 0.9 | – | 12.5 | 23.5 | 23.5 |
| | | | Weight average molecular weight | Four hundred thirty thousand | Three hundred fifty thousand | Two hundred eighty thousand | – | Three hundred fifty thousand | Four hundred thirty thousand | Four hundred thirty thousand |
| | | Resin other than polyvinyl acetal resin | Content (parts by weight) | – | – | 200 | 100 | – | – | – |
| | | | Ethyl acrylate (% by weight) | – | – | 28 | 28 | – | – | – |
| | | | Butyl acrylate (% by weight) | – | – | 22 | 22 | – | – | – |
| | | | Benzyl acrylate (% by weight) | – | – | 30 | 30 | – | – | – |
| | | | 2-Hydroxyethyl acrylate (% by weight) | – | – | 20 | 20 | – | – | – |
| | | | 2-Ethylhexyl acrylate (% by weight) | – | – | – | – | – | – | – |
| | | | Weight average molecular weight | – | – | Eight hundred thousand | Ninety thousand | – | – | – |
| | | Additive | Silica particles (parts by weight) | – | 20 | – | – | – | – | – |
| | | Plasticizer | Kind | 3GO | 3GO | 3GO | 3GO | 3GO | 3GO | 3GO |
| | | | Content (parts by weight) | 70 | 70 | 20 | 20 | 80 | 70 | 70 |
| | | Thickness (μm) | | 60 | 60 | 100 | 50 | 100 | 20 | 40 |
| | Third layer | Polyvinyl acetal resin | Content (parts by weight) | 100 | 100 | 100 | 100 | 100 | 100 | 100 |
| | | | Average polymerization degree | 2000 | 2000 | 2000 | 500 | 2000 | 2000 | 2000 |
| | | | Content of hydroxyl group (mol%) | 30.6 | 30.6 | 30.6 | 32.5 | 30.6 | 27 | 27 |
| | | | Butyralization degree (mol%) | 68.5 | 68.5 | 68.5 | 66.3 | 68.5 | 72.5 | 72.5 |
| | | | Kind of acetal | Acetoacetal | Acetoacetal | Acetoacetal | Acetoacetal | Acetoacetal | Acetoacetal | Acetoacetal |
| | | | Acetylation degree (mol%) | 0.9 | 0.9 | 0.9 | 1.2 | 0.9 | 0.5 | 0.5 |
| | | | Weight average molecular weight | Three hundred thousand | Three hundred thousand | Three hundred thousand | One hundred thirty thousand | Three hundred thousand | Two hundred seventy thousand | Two hundred seventy thousand |
| | | Plasticizer | Kind | 3GO | 3GO | 3GO | 3GO | 3GO | 3GO | 3GO |
| | | | Content (parts by weight) | 20 | 20 | 20 | 20 | 35 | 20 | 20 |
| | | Thickness (μm) | | 800 | 400 | 330 | 360 | 330 | 800 | 800 |
| | Thickness of second lamination glass member (mm) | | | 1.0 | 1.4 | 1.8 | 1.6 | 1.4 | 1.0 | 1.0 |
| Evaluation | (1) Equivalent viscoelasticity | | Shear storage equivalent elastic modulus (judgment) | ○○ | ○○ | ○○ | ○○ | × | ○○ | ○○ |
| | | | Value (10℃ to 50℃) obtained by dividing shear storage elastic modulus at 10℃ by shear storage elastic modulus at 50℃ | 2.5 | 2.1 | 3.2 | 8.4 | 15 | 2.2 | 2.2 |
| | | | Tg (= tan δ peak temperature) (℃) | –5 | –7 | –4 | –2 | –5 | –5 | –5 |
| | | | Largest value of tan δ (–50℃ to 0℃) | 0.2 | 0.2 | 0.4 | 0.6 | 0.6 | 0.08 | 0.09 |
| | | | tan δ (Judgment) | ○ | ○ | ○ | ○ | ○ | × | × |
| | (2) Flexural rigidity | | Judgment (10℃/20℃/50℃) | ○/○/○ | ○/○/○ | ○/○/○ | △/△/△ | △/×/× | ○/○/○ | ○/○/○ |
| | (3) Sound insulating properties | | Judgment (10℃/20℃/50℃) | ○/○/○ | ○/○/○ | ○/○/○ | ○/○/○ | ○/○/○ | ×/×/○ | ×/×/○ |
| | (4) Penetration resistance | | Judgment (20℃/50℃) | ○/○ | ○/○ | ○/○ | ○/○ | ○/× | ○/○ | ○/○ |
| | (5) Foaming prevention properties | | Judgment | ○ | ○○ | ○○ | △ | × | ○ | ○ |
| | (6) Flexural lamination properties | | Judgment | ○ | ○ | ○ | ○ | ○ | × | × |

[Table 2]

| | | | | Example 5 | Example 6 | Comparative Example 4 | Example 7 | Example 8 | Example 9 | Example 10 |
|---|---|---|---|---|---|---|---|---|---|---|
| Configuration of laminated glass | Thickness of first lamination glass member (mm) | | | 1.0 | 0.7 | 1.0 | 1.0 | 1.0 | 1.0 | 1.0 |
| | Interlayer film | Polyvinyl acetal resin | Content (parts by weight) | 100 | 100 | 100 | 100 | 100 | 100 | 100 |
| | | | Average polymerization degree | 2000 | 2000 | 1700 | 2000 | 2000 | 2000 | 2000 |
| | | | Content of hydroxyl group (mol%) | 30.6 | 30.6 | 30.6 | 27 | 27 | 27 | 27 |
| | | | Acetalization degree (mol%) | 68.5 | 68.5 | 68.5 | 72.5 | 72.5 | 72.5 | 72.5 |
| | | | Kind of acetal | Acetoacetal | Acetoacetal | Butyral | Acetoacetal | Acetoacetal | Acetoacetal | Acetoacetal |
| | | | Acetylation degree (mol%) | 0.9 | 0.9 | 0.9 | 0.5 | 0.5 | 0.5 | 0.5 |
| | | | Weight average molecular weight | Three hundred thousand | Three hundred thousand | Two hundred seventy thousand | Two hundred seventy thousand | Two hundred seventy thousand | Two hundred seventy thousand | Two hundred seventy thousand |
| | | Resin other than polyvinyl acetal resin | Content (parts by weight) | 100 | 80 | - | 100 | 120 | 140 | 200 |
| | | | Ethyl acrylate (% by weight) | 22 | 25 | - | - | - | - | - |
| | | | Butyl acrylate (% by weight) | 28 | 25 | - | - | - | - | - |
| | | | Benzyl acrylate (% by weight) | 30 | 30 | - | 32 | 32 | 32 | 32 |
| | | | 2-Hydroxyethyl acrylate (% by weight) | 20 | 20 | - | 30 | 30 | 30 | 30 |
| | | | 2-Ethylhexyl acrylate (% by weight) | - | - | - | 38 | 38 | 38 | 38 |
| | | | Weight average molecular weight | Three hundred fifty thousand | Eight hundred thousand | - | Two hundred eighty thousand | Three hundred twenty thousand | Four hundred twenty thousand | Six hundred thirty thousand |
| | | Additive | Silica particles (parts by weight) | - | - | - | - | - | - | - |
| | | Plasticizer | Kind | - | - | - | - | - | - | - |
| | | | Content (parts by weight) | - | - | - | - | - | - | - |
| | | Thickness (μm) | | 760 | 760 | 760 | 800 | 800 | 800 | 800 |
| | Thickness of second lamination glass member (mm) | | | 1.0 | 1.0 | 1.0 | 1.0 | 1.0 | 1.0 | 1.4 |
| Evaluation | (1) Equivalent viscoelasticity | | Shear storage equivalent elastic modulus (judgment) | ○○ | ○ | ○ | ○○ | ○○ | ○○ | ○○ |
| | | | Value (10°C to 50°C) obtained by dividing shear storage elastic modulus at 10°C by shear storage elastic modulus at 50°C | 2.4 | 2.1 | 1.1 | 1.8 | 2.1 | 2.2 | 2.2 |
| | | | Tg (= tan δ peak temperature X°C | -7 | -4 | Not observed | -13 | -11 | -10 | -10 |
| | | | Largest value of tan δ (-50°C to 0°C) | 0.2 | 0.2 | - | 0.11 | 0.12 | 0.13 | 0.24 |
| | | | tan δ (Judgment) | ○ | △ | × | △ | ○ | ○ | ○ |
| | (2) Flexural rigidity | | Judgment (10°C/20°C/50°C) | ○/○/○ | ○/○/○ | ○/○/○ | ○/○/○ | ○/○/○ | ○/○/○ | ○/○/○ |
| | (3) Sound insulating properties | | Judgment (10°C/20°C/50°C) | ○/○/○ | △/△/○ | ×/×/× | △/△/○ | ○/○/○ | ○/○/○ | ○/○/○ |
| | (4) Penetration resistance | | Judgment (20°C/50°C) | ○/○ | ○/○ | ×/× | ○/○ | ○/○ | ○/○ | ○/○ |
| | (5) Foaming prevention properties | | Judgment | ○○ | ○○ | ○ | ○○ | ○○ | ○○ | ○○ |
| | (6) Flexural lamination properties | | Judgment | ○ | △ | × | ○ | ○ | ○ | ○ |

[Table 3]

| | | | | Example 11 | Example 12 | Example 13 | Example 14 | Example 15 | Example 16 | Example 17 |
|---|---|---|---|---|---|---|---|---|---|---|
| Configuration of laminated glass | Thickness of first lamination glass member (mm) | | | 1.0 | 1.3 | 1.3 | 1.3 | 1.3 | 1.3 | 1.3 |
| | Interlayer film | Polyvinyl acetal resin | Content (parts by weight) | 100 | 100 | 100 | 100 | 100 | 100 | 100 |
| | | | Average polymerization degree | 2000 | 2000 | 2000 | 2000 | 2000 | 2000 | 2000 |
| | | | Content of hydroxyl group (mol%) | 27 | 27 | 27 | 27 | 27 | 27 | 27 |
| | | | Acetalization degree (mol%) | 72.5 | 72.5 | 72.5 | 72.5 | 72.5 | 72.5 | 72.5 |
| | | | Kind of acetal | Acetoacetal | Acetoacetal | Acetoacetal | Acetoacetal | Acetoacetal | Acetoacetal | Acetoacetal |
| | | | Acetylation degree (mol%) | 0.5 | 0.5 | 0.5 | 0.5 | 0.5 | 0.5 | 0.5 |
| | | | Weight average molecular weight | Two hundred seventy thousand | Two hundred seventy thousand | Two hundred seventy thousand | Two hundred seventy thousand | Two hundred seventy thousand | Two hundred seventy thousand | Two hundred seventy thousand |
| | | Resin other than polyvinyl acetal resin | Content (parts by weight) | 140 | 120 | 120 | 120 | 150 | 150 | 150 |
| | | | Ethyl acrylate (% by weight) | - | - | - | - | - | - | - |
| | | | Butyl acrylate (% by weight) | - | - | - | - | - | 49 | 57 |
| | | | Benzyl acrylate (% by weight) | 32 | 32 | 32 | 32 | 32 | 21 | 23 |
| | | | 2-Hydroxyethyl acrylate (% by weight) | 30 | 30 | 30 | 30 | 40 | 30 | 20 |
| | | | 2-Ethylhexyl acrylate (% by weight) | 38 | 38 | 38 | 38 | 28 | - | - |
| | | | Weight average molecular weight | Four hundred twenty thousand | Three hundred twenty thousand | Three hundred twenty thousand | Three hundred twenty thousand | Two hundred fifty thousand | Three hundred thirty thousand | Three hundred fifty thousand |
| | | Additive | Silica particles (parts by weight) | - | - | - | - | - | - | - |
| | | Plasticizer | Kind | - | 3GO | 3GO | 3GO | 3GO | 3GO | 3GO |
| | | | Content (parts by weight) | - | 5 | 10 | 15 | 5 | 5 | 5 |
| | | Thickness (μm) | | 800 | 800 | 800 | 800 | 800 | 800 | 800 |
| | Thickness of second lamination glass member (mm) | | | 1.4 | 1.3 | 1.3 | 1.3 | 1.3 | 1.3 | 1.3 |
| Evaluation | (1) Equivalent viscoelasticity | | Shear storage equivalent elastic modulus (judgment) | ○○ | ○○ | ○○ | ○○ | ○○ | ○○ | ○○ |
| | | | Value (10°C to 50°C) obtained by dividing shear storage elastic modulus at 10°C by shear storage elastic modulus at 50°C | 2.2 | 2.1 | 2.1 | 2.2 | 2.1 | 2.1 | 2.4 |
| | | | Tg (= tan δ peak temperature) (°C) | -10 | -12 | -13 | -16 | -9 | -11 | -12 |
| | | | Largest value of tan δ (-50°C to 0°C) | 0.13 | 0.12 | 0.13 | 0.13 | 0.12 | 0.16 | 0.16 |
| | | | tan δ (Judgment) | ○ | ○ | ○ | ○ | ○ | ○ | ○ |
| | (2) Flexural rigidity | | Judgment (10°C/20°C/50°C) | ○/○/○ | ○/○/○ | ○/○/○ | ○/○/○ | ○/○/○ | ○/○/○ | ○/○/○ |
| | (3) Sound insulating properties | | Judgment (10°C/20°C/50°C) | ○/○/○ | ○/○/○ | ○/○/○ | ○/○/○ | ○/○/○ | ○/○/○ | ○/○/○ |
| | (4) Penetration resistance | | Judgment (20°C/50°C) | ○/○ | ○/○ | ○/○ | ○/○ | ○/○ | ○/○ | ○/○ |
| | (5) Foaming prevention properties | | Judgment | ○○ | ○○ | ○○ | ○○ | ○○ | ○○ | ○○ |
| | (6) Flexural lamination properties | | Judgment | ○ | ○ | ○ | ○ | ○ | ○ | ○ |

[Table 4]

| | | | | Example 18 | Example 19 | Example 20 | Example 21 | Example 22 | Comparative Example 5 | Comparative Example 6 |
|---|---|---|---|---|---|---|---|---|---|---|
| Configuration of laminated glass | Thickness of first lamination glass member (mm) | | | 1.3 | 1.3 | 1.0 | 1.0 | 1.3 | 1.0 | 1.3 |
| | Interlayer film | Polyvinyl acetal resin | Content (parts by weight) | 100 | 100 | 100 | 100 | 100 | 100 | 100 |
| | | | Average polymerization degree | 2000 | 2000 | 1700 | 1700 | 1700 | 1700 | 1700 |
| | | | Content of hydroxyl group (mol%) | 27 | 27 | 30.6 | 30.6 | 30.6 | 30.6 | 30.6 |
| | | | Acetalization degree (mol%) | 72.5 | 72.5 | 68.5 | 68.5 | 68.5 | 68.5 | 68.5 |
| | | | Kind of acetal | Acetoacetal | Acetoacetal | Butyral | Butyral | Butyral | Butyral | Butyral |
| | | | Acetylation degree (mol%) | 0.5 | 0.5 | 0.9 | 1.9 | 2.9 | 3.9 | 4.9 |
| | | | Weight average molecular weight | Two hundred seventy thousand | Two hundred seventy thousand | Two hundred seventy thousand | Two hundred seventy thousand | Two hundred seventy thousand | Two hundred seventy thousand | Two hundred seventy thousand |
| | | Resin other than polyvinyl acetal resin | Content (parts by weight) | 150 | 150 | 150 | 150 | 150 | - | - |
| | | | Ethyl acrylate (% by weight) | - | - | - | - | - | - | - |
| | | | Butyl acrylate (% by weight) | 65 | 69 | - | - | - | - | - |
| | | | Benzyl acrylate (% by weight) | 25 | 26 | 32 | 32 | 32 | - | - |
| | | | 2-Hydroxyethyl acrylate (% by weight) | 10 | 5 | 40 | 40 | 40 | - | - |
| | | | 2-Ethylhexyl acrylate (% by weight) | - | - | 28 | 28 | 28 | - | - |
| | | | Weight average molecular weight | Three hundred Ninety thousand | Four hundred sixty thousand | Four hundred twenty thousand | Four hundred twenty thousand | Four hundred twenty thousand | - | - |
| | | Additive | Silica particles (parts by weight) | - | - | - | - | - | - | - |
| | | Plasticizer | Kind | 3GO | 3GO | - | - | - | 3GO | 3GO |
| | | | Content (parts by weight) | 5 | 5 | - | - | - | 20 | 20 |
| | | Thickness (μm) | | 800 | 800 | 800 | 800 | 800 | 760 | 760 |
| | Thickness of second lamination glass member (mm) | | | 1.3 | 1.3 | 1.0 | 1.8 | 1.3 | 1.8 | 1.3 |
| Evaluation | (1) Equivalent viscoelasticity | | Shear storage equivalent elastic modulus (judgment) | ○○ | ○○ | ○○ | ○○ | ○○ | × | × |
| | | | Value (10°C to 50°C) obtained by dividing shear storage elastic modulus at 10°C by shear storage elastic modulus at 50°C | 2.3 | 2.8 | 2.6 | 2.6 | 2.6 | 97 | 97 |
| | | | Tg (= tan δ peak temperature) (°C) | -15 | -20 | -7 | -7 | -7 | Not observed | Not observed |
| | | | Largest value of tan δ (-50°C to 0°C) | 0.18 | 0.18 | 0.22 | 0.22 | 0.22 | - | - |
| | | | tan δ (Judgment) | ○ | ○ | ○ | ○ | ○ | × | × |
| | (2) Flexural rigidity | | Judgment (10°C/20°C/50°C) | ○/○/○ | ○/○/○ | ○/○/○ | ○/○/○ | ○/○/○ | ○/○/× | ○/○/× |
| | (3) Sound insulating properties | | Judgment (10°C/20°C/50°C) | ○/○/○ | ○/△/△ | ○/○/○ | ○/○/○ | ○/○/○ | ×/×/× | ×/×/× |
| | (4) Penetration resistance | | Judgment (20°C/50°C) | ○/○ | ○/○ | ○/○ | ○/○ | ○/○ | ○/× | ○/× |
| | (5) Foaming prevention properties | | Judgment | ○○ | ○○ | ○○ | ○○ | ○○ | ○ | ○ |
| | (6) Flexural lamination properties | | Judgment | ○ | ○ | ○ | ○ | ○ | ○ | ○ |

## EXPLANATION OF SYMBOLS

1: First layer
1a: First surface
1b: Second surface
2: Second layer

2a: Outer surface
3: Third layer
3a: Outer surface
11: Interlayer film
11A: Interlayer film (first layer)
11a: First surface
11b: Second surface
21: First lamination glass member
22: Second lamination glass member
31: Laminated glass
31A: Laminated glass

## Claims

**1.** An interlayer film for laminated glass having: a shear storage equivalent elastic modulus of 10 MPa or more and 500 MPa or less in a temperature region of 80% or more of the temperature region of 0°C or more and 60°C or less; a value obtained by dividing a shear storage equivalent elastic modulus at 10°C by a shear storage equivalent elastic modulus at 50°C of 1 or more and 10 or less;
a glass transition temperature falling within the range of -25°C or more and 0°C or less; and
a largest value of tan δ in a temperature region of - 50°C or more and 0°C or less of 0.1 or more and 1 or less.

**2.** The interlayer film for laminated glass according to claim 1, having a glass transition temperature falling within the range of -20°C or more.

**3.** The interlayer film for laminated glass according to claim 1 or 2, comprising a resin with a weight average molecular weight of 100000 or more and 1300000 or less.

**4.** The interlayer film for laminated glass according to any one of claims 1 to 3, having a value of tan δ of 0.1 or more in a temperature region of 10% or more of the temperature region of -50°C or more and 0°C or less.

**5.** The interlayer film for laminated glass according to any one of claims 1 to 4, having a shear storage equivalent elastic modulus of 10 MPa or more and 400 MPa or less in a temperature region of 80% or more of the temperature region of 0°C or more and 60°C or less.

**6.** The interlayer film for laminated glass according to any one of claims 1 to 5, comprising a polyvinyl acetal resin.

**7.** The interlayer film for laminated glass according to claim 6, wherein the polyvinyl acetal resin is a polyvinyl acetoacetal resin or a polyvinyl butyral resin.

**8.** The interlayer film for laminated glass according to any one of claims 1 to 5, comprising an acrylic polymer.

**9.** The interlayer film for laminated glass according to claim 6 or 7, comprising a thermoplastic resin other than the polyvinyl acetal resin.

**10.** The interlayer film for laminated glass according to claim 6 or 7, comprising an acrylic polymer.

**11.** The interlayer film for laminated glass according to any one of claims 1 to 10, having a thickness of 3 mm or less.

**12.** The interlayer film for laminated glass according to any one of claims 1 to 11, being used together with a first glass plate having a thickness of 1.6 mm or less and being arranged between the first glass plate and a second glass plate and being used for obtaining laminated glass.

**13.** The interlayer film for laminated glass according to any one of claims 1 to 12, being arranged between a first glass plate and a second glass plate and being used for obtaining laminated glass,
wherein the sum of the thickness of the first glass plate and the thickness of the second glass plate is 3.5 mm or less.

**14.** Laminated glass, comprising:

a first lamination glass member;
a second lamination glass member; and
the interlayer film for laminated glass according to any one of claims 1 to 11,
the interlayer film for laminated glass being arranged between the first lamination glass member and the second lamination glass member.

**15.** The laminated glass according to claim 14, wherein
the first lamination glass member is a first glass plate, and
the thickness of the first glass plate is 1.6 mm or less.

**16.** The laminated glass according to claim 14 or 15, wherein
the first lamination glass member is a first glass plate,
the second lamination glass member is a second glass plate, and
the sum of the thickness of the first glass plate and the thickness of the second glass plate is 3.5 mm or less.

[FIG. 1]

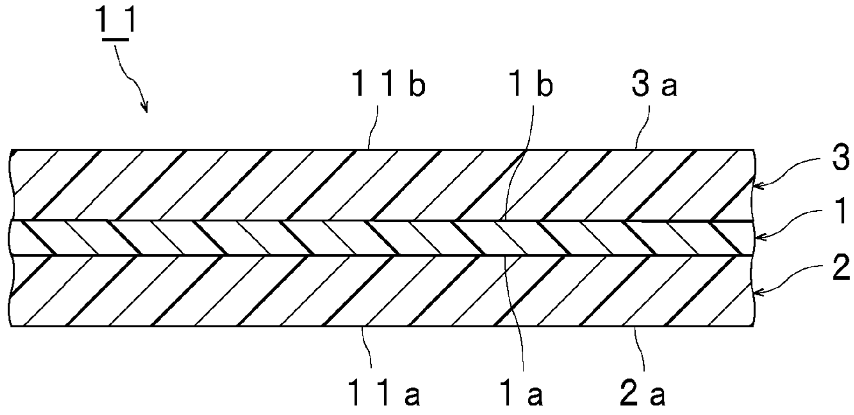


[FIG. 2]

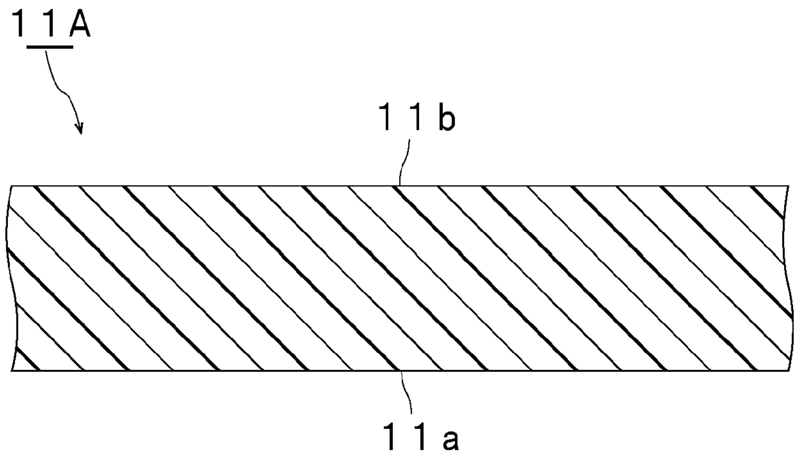


[FIG. 3]

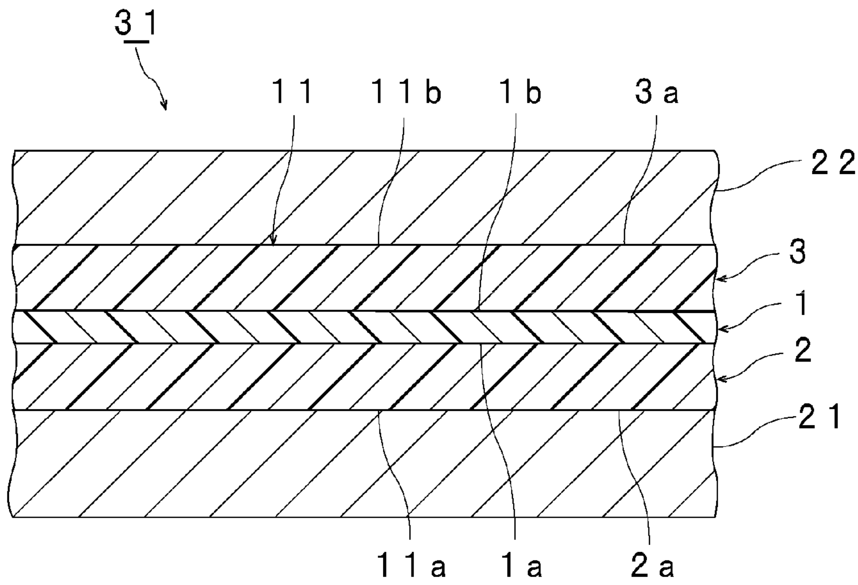

[FIG. 4]

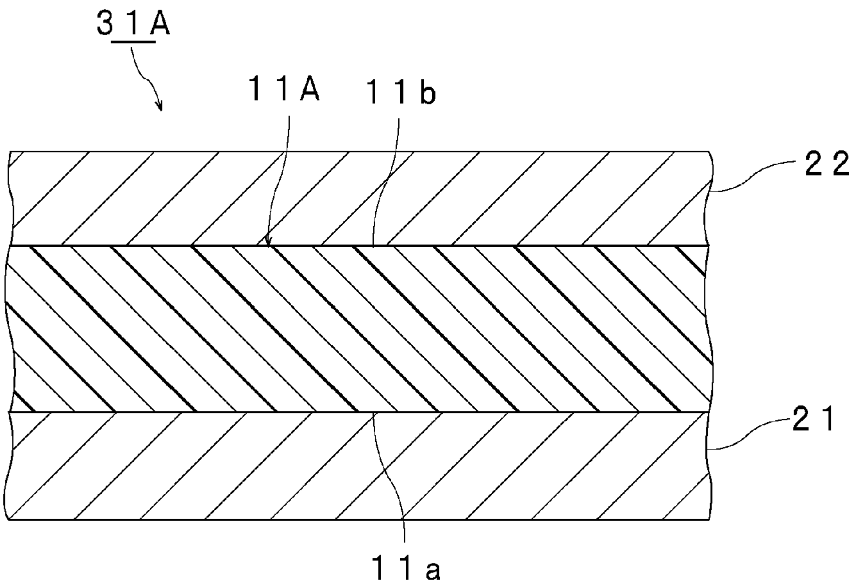


[FIG. 5]

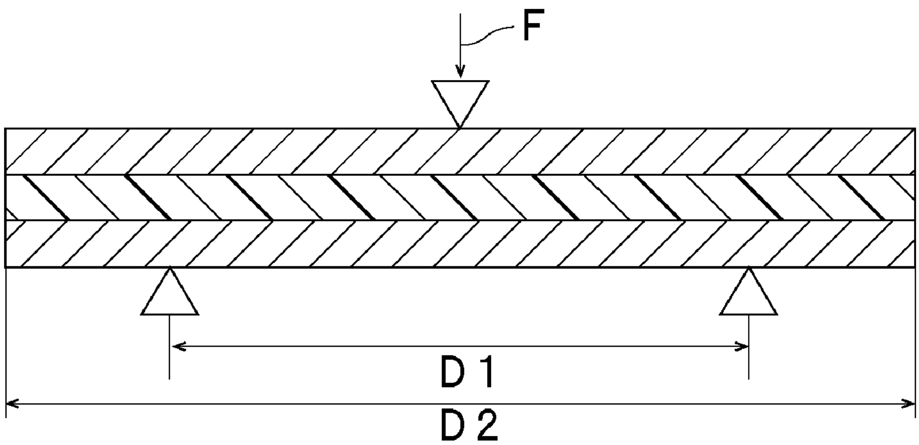

**INTERNATIONAL SEARCH REPORT**

International application No.
PCT/JP2016/059475

A. CLASSIFICATION OF SUBJECT MATTER
*C03C27/12*(2006.01)i, *B32B17/10*(2006.01)i

According to International Patent Classification (IPC) or to both national classification and IPC

B. FIELDS SEARCHED

Minimum documentation searched (classification system followed by classification symbols)
C03C27/00-29/00, B32B1/00-43/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-537436 A (Saint-Gobain Glass France), 29 October 2009 (29.10.2009), paragraphs [0001], [0027] to [0028] & US 2009/0159362 A1 paragraphs [0001], [0027] to [0028] & JP 5296673 B2 & WO 2007/135317 A1 & EP 2026963 A1 & KR 10-2009-0020546 A & CN 101448638 A | 1-16 |
| A | JP 2007-070200 A (Asahi Glass Co., Ltd.), 22 March 2007 (22.03.2007), paragraphs [0020] to [0021] (Family: none) | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 June 2016 (07.06.16) | 14 June 2016 (14.06.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/059475

C (Continuation). DOCUMENTS CONSIDERED TO BE RELEVANT

| Category* | Citation of document, with indication, where appropriate, of the relevant passages | Relevant to claim No. |
|---|---|---|
| A | JP 2014-224234 A (Sekisui Chemical Co., Ltd.), 04 December 2014 (04.12.2014), paragraphs [0014] to [0015] (Family: none) | 1-16 |
| A | US 2008/0216940 A1 (VAN PEER, Cornelis Johannes Gerardus Maria et al.), 11 September 2008 (11.09.2008), fig. 1 to 3; paragraph [0039] & WO 2008/110925 A2 & EP 2132037 A2 & CN 101631673 A | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007070200 A
- US 20130236711 A1
- WO 2008122608 A1